(19) Europäisches Patentamt
European Patent Office
Office européen des brevets

(11) **EP 4 776 208 A1**

(12) **EUROPEAN PATENT APPLICATION**

(43) Date of publication:
**15.07.2026 Bulletin 2026/29**

(21) Application number: **25151314.9**

(22) Date of filing: **10.01.2025**

(51) International Patent Classification (IPC):
**G06Q 20/38** (2012.01)      **G06Q 20/02** (2012.01)

(52) Cooperative Patent Classification (CPC):
**G06Q 20/3829; G06Q 20/027; G06Q 20/38215;**
**G06Q 20/385;** G06Q 2220/00

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Mastercard International, Inc.**
**Purchase, NY 10577 (US)**

(72) Inventors:
• **RADU, Cristian**
**1320 Beauvechain (BE)**
• **JOHNSON, Alan**
**Maldon, CM9 8HW (GB)**

(74) Representative: **Keltie LLP**
**No. 1 London Bridge**
**London SE1 9BA (GB)**

(54) **TOKENISATION SECURITY AND PRIVACY**

(57)     A computer-implemented method of tokenisation is described. A first value for a data field is provided, which is determined in accordance with a set of data field rules. Some or all places in the data field of the first value are encrypted using format preserving encryption to provide an encrypted first token also complying with the set of data field rules. The encrypted first token is used in place of the first value in one or more operations associated with the data field. A computing device adapted to implement such a method is also described.

Figure 1

## Description

<u>Field of Disclosure</u>

This disclosure relates to tokenisation, and in particular to management of tokenisation to address security and privacy concerns.

<u>Background to Disclosure</u>

Transactions using a payment device such as a payment card have developed very considerably over time. Such transactions require evidence of an agreement between two parties to transact, with this evidence in a form such that it can be used by an authorizing party to determine whether the transaction should proceed and that funds to support it should be transferred. Providing such evidence will require use of at least some data that could reasonably considered private to the cardholder - this is separate from an indication that the transaction has been authorized by the cardholder (by features such as a PIN or a biometric) - including data such as a cardholder's account number and information indicating the authenticity of the cardholder's card or device.

For digital transactions, tokenization is often used. Tokenization is a technique regularly used in data security for protection of sensitive data elements - it involves the replacement of the sensitive data element with a non-sensitive equivalent, typically with a similar form or format so that it can interact with systems or processes in the same way as the sensitive data element. The token is a reference or identifier that maps back to the sensitive data element through a detokenization process. The mapping from sensitive data element to token uses methods that make a reverse mapping impractical without access to the detokenization process. Detokenization will typically involve the use of a token vault in which tokens are stored against their corresponding sensitive data elements in a secure manner.

Tokenization is widely used in transaction systems to switch transactions on an ISO 8583 payment network, though it is also used in a number of other contexts where personally identifiable information or other sensitive data is used (medical records, official documentation, stock trading and so on). In transaction systems, it is generally used in connection with mobile or other digital payment. A mobile device will typically use a mobile wallet for performing card transactions, with the mobile wallet containing one or more digital cards each representing a user account. A token is attached to each digital card, and it is the token which is used in a transaction with the digital card and not the account number (Primary Account Number- PAN) itself. Once the transaction is submitted for authorization, the payment network detects that a token rather than a PAN has been used, and routes the transaction for detokenization using the token vault so that it can be authorized by or for the cardholder's issuing bank.

Digital cards are now very numerous, and payment networks extend across the whole planet. Token vaults are thus heavily used and contain a large amount of information which needs to be held securely, accessed rapidly, and managed efficiently while the digital card data or the interaction channel data change, or it is deleted. This creates a challenge for effective and timely performance and authorisation of digital transactions.

Tokenization can address one significant piece of cardholder data - the PAN - but as indicated above, this may not be the only piece of cardholder data that is significant for cardholder privacy. Other elements that go to make up the payment proof itself may typically create privacy concerns for the cardholder. To add to this complexity, there are many types of digital transaction possible. These different types of digital transactions create different security concerns, and may have different performance requirements, and these may interact - for example, a fast digital transaction that is limited to low value transactions may require a more limited security protocol than a digital transaction which is not time constrained and which is only constrained in value by the cardholder's account. It is difficult to manage these different challenges in one digital transaction framework.

A particular issue that needs to be addressed is to ensure that all necessary security and privacy concerns are met. Tokenisation addresses these concerns at least partially, but existing tokenization solutions may still lead to security and privacy concerns, or can only address these concerns by measures that significantly compromise the efficiency of the overall solution. It would be desirable to develop tokenisation strategies that are effective to address security and privacy concerns without compromising their effectiveness for their intended function.

<u>Summary of Disclosure</u>

In a first aspect, the disclosure provides a computer-implemented method of tokenisation comprising:

providing a first value for a data field determined in accordance with a set of data field rules;
encrypting some or all places in the data field of the first value using format preserving encryption to provide an encrypted first token also complying with the set of data field rules; and
using the encrypted first token in place of the first value in one or more operations associated with the data field.

Using this approach, a new token can be provided which satisfies any restrictions required of the token, according to processing pathways or parameters of a valid token, while allowing local control of the actual token value. This may, for example, allow local control of security considerations rather than reliance on the security of a centralized data handling process.

In embodiments, this may comprise providing a set of first values and encrypting the set of first values to provide a set of encrypted first tokens, and using the set of encrypted first tokens in place of the set of first values in a predetermined computing environment. This approach allows actual token values to be anonymised when exposed in less secure environments, or environments where the token owner or party most affected by misuse of it lacks control.

In embodiments, the format preserving encryption has inputs comprising a key and a tweak, wherein the use or purpose of the encrypted first token determines a value of the key, the tweak, or both. In such cases, the method may involve providing at least an encrypted second token from the first value, wherein a plurality of encrypted tokens are then provided from the first value for different uses or purposes. This approach potentially allows use-specific tokenisation that can allow a base token to be used to support a range of different use cases in such a way that each use case is independent of the other.

In embodiments, the method may comprise preserving a first set of places in the data field and encrypting a second set of places in the data field.

In embodiments, the format preserving encryption method may comprise digit-by-digit encryption. This approach can be particularly effective in environments where transformation of the token is desirable but speed is important, as this approach can involve substantial pre-computation.

In other embodiments, the format preserving encryption method may comprise field preserving encryption for fields comprising multiple digits.

In embodiments, the first value may be, or represent, an account number for a payment device, and wherein the encrypted first token may then be used in place of the first value in one or more operations involved in performance or authorisation of a digital transaction. In such a case, the first value may itself be a token representing an account number for a payment device.

In embodiments of this kind where the set of encrypted first tokens is used in place of the set of first values, the set of first values may be stored in a secure database, and the predetermined computing environment may be a computing environment within a transaction processing system directly accessible to human operators. Using an approach of this type prevents the actual token values from being exposed to the human operators, limiting any associated security risk.

In embodiments of this type wherein a plurality of encrypted tokens are provided from the first value for different uses or purposes, the encrypted first token and the encrypted second token may be adapted for use in the processing of transactions for different transaction processing routes. Using this approach, difference in transaction processing routes can be handled extremely efficiently.

In embodiments of this type comprising preserving a first set of places in the data field and encrypting a second set of places in the data field, the first set of places in the data field may identify financial institutions and/or financial products, and the second set of places in the data field may represent user account information.

In a second aspect, the disclosure provides a computing device comprising a processor and memory and adapted to perform the method of the first aspect. In embodiments, this computing device may be programmed to perform as a payment device. In other embodiments, this computing device may be a server comprised within a transaction system and adapted for one or more of the provisioning of payment devices and the processing or authorization of transactions, wherein the server is programmed to perform the method of the first aspect.

Brief Description of the Drawings

Specific embodiments of the disclosure will be described below, by way of example, with reference to the accompanying drawings, of which:

Figure 1 shows a general embodiment of a tokenisation strategy according to the disclosure;

Figure 2 shows schematically a distributed transaction architecture using a four-party model;

Figure 3 illustrates elements of a complex distributed system adapted to implement the transaction architecture of Figure 2;

Figure 4 shows schematically an exemplary system for enabling digital transactions in the transaction architecture of Figure 3;

Figure 5 shows the transaction path of a digital contactless transaction according to a conventional tokenization arrangement;

Figure 6 shows the structure of a conventional token;

Figures 7A to 7C illustrate the nature and operation of a tweakable block cipher, as used in embodiments of the disclosure;

Figure 8 shows an exemplary method of forming a tweakable block cipher from a conventional block cipher;

Figures 9A and 9B illustrate initialization of a digit-by-digit format preserving encryption method used in embodiments of the disclosure.

Figures 10A, 10B and 10C illustrate the creation of an initialization table using digit-by-digit encryption;

Figure 11 illustrates a cryptographic mechanism for using field preserving encryption to generate the account number of a token in an embodiment of the disclosure;

Figure 12 illustrates an exemplary tokenization process using the cryptographic mechanism of Figure 11;

Figure 13 illustrates an approach to providing tweak/spice data for the field preserving encryption approach of Figures 11 and 12;

Figure 14 illustrates an approach to varying tokenisation methods and payment proofs according to security requirements in accordance with an embodiment of the disclosure;

Figure 15 provides an approach for preserving privacy during token management according to an embodiment of the disclosure;

Figure 16 illustrates an approach to supporting different processing routes for a single PAN according to an embodiment of the disclosure;

Figure 17 illustrates an approach to management of secure-card-on-file transactions according to an embodiment of the disclosure;

Figure 18 illustrates an exemplary approach to derivation of a session key for the secure-card-on-file transaction of Figure 17;

Figures 19A and 19B illustrate a conventional secure-card-on-file authorisation process and a new secure-card-on-file authorisation process according to an embodiment of the disclosure respectively;

Figure 20 illustrates a method for generating a one-time-token for use as a payment proof according to an embodiment of the disclosure;

Figure 21 illustrates one method for generating a one-time-token of the type indicated in Figure 20 according to an embodiment of the disclosure;

Figure 22 illustrates a further method for generating a one-time-token of the type indicated in Figure 20 according to an embodiment of the disclosure;

Figure 23 illustrates how the one-time-token of Figure 22 can be used as a payment proof according to an embodiment of the disclosure;

Figure 24 illustrates an approach to performing online-only contactless transactions in accordance with an embodiment of the disclosure;

Figure 25 illustrates an approach to generation of a private token according to an embodiment of the disclosure;

Figure 26 indicates an approach for using a one-time-token as a payment proof where offline data authentication is required according to an embodiment of the disclosure;

Figure 27 shows an approach to token processing in accordance with an embodiment of the disclosure in which different tokens are provided for different processing routes;

Figure 28 illustrates a token structure for an exemplary token of the type used in the token processing arrangement of Figure 27;

Figure 29 shows a wallet application and its cryptographic engine according to an embodiment of the disclosure; and

Figure 30 shows a payment proof mechanism according to an embodiment of the disclosure adapted for use with the wallet application of Figure 29.

<u>Detailed Description</u>

General and specific embodiments of the disclosure will be described below with reference to the Figures.

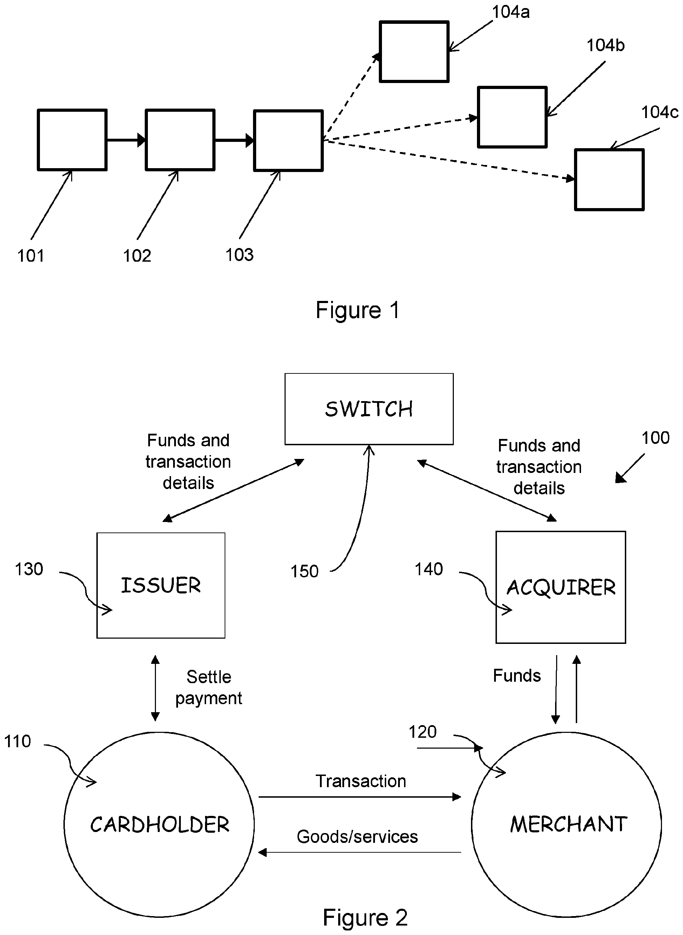

Figure 1 illustrates a tokenisation strategy according to an embodiment of the disclosure, and indicates contexts in which such a tokenisation strategy can be employed to address security and privacy issues without compromising efficiency. The basic strategy is to start with an initial token 101, then to encrypt 102 some or all of the token using format preserving encryption, and to use the encrypted token 103 for one or more purposes 104, typically a purpose that would give rise to a security or a privacy issue. This may be to prevent visibility of the token where it would otherwise be exposed 104a, to allow secure passage of the token (in which case part of the token may not be encrypted in order to allow effective routing) 104b, or to limit use of the token to specific users in the system 104c.

Figure 2 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of an online transaction). Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

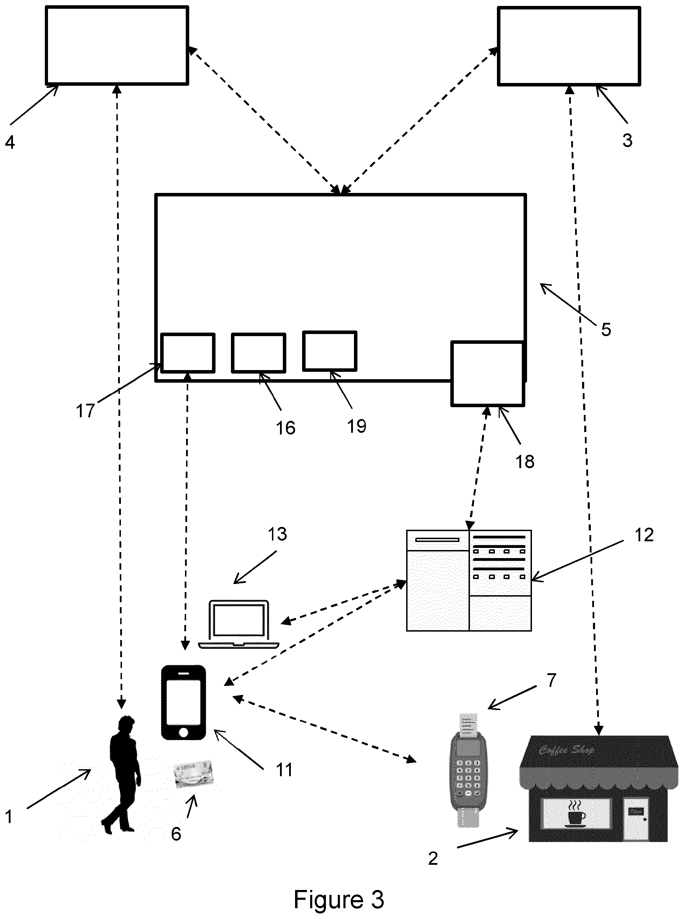

Figure 3 shows an architecture according to an embodiment of the disclosure appropriate for interaction between a cardholder and a merchant. This Figure shows a general-purpose architecture for reference but shows in particular elements of an architecture used when a cardholder carries out an online transaction with a merchant server.

For a conventional transaction, a cardholder 1 will use their payment card 6 - or a mobile computing device such as smartphone 11 adapted for use as a contactless payment device - to transact with a POS terminal 7 of a merchant 2.

However, in embodiments relevant to the present disclosure, the cardholder will use his or her computing device - which may be any or all of a cellular telephone handset, a tablet, a laptop, a static personal computer or any other suitable computing device (here smartphone 11 and laptop computer 13 are shown as examples - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smartphone 11 can use this to transact with a merchant POS terminal 7 using NFC or another contactless technology, or to make a payment in association with its wallet service as discussed below. However, online transactions with a merchant are also of particular interest in connection with embodiments of the disclosure, rather than only contact or contactless transactions with a merchant POS terminal 7. To make an online transaction, the user one of their computing devices can interact with a merchant server 12 representing the merchant 2 over any appropriate network connection, such as the public internet - the connection to the merchant may be provided by an app or application on the computing device.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet based transactions for processing by the transaction infrastructure. In other embodiments, the wallet service 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction scheme infrastructure provides a digital enablement service 16 to support the performance of tokenized digital transactions, and to interact with other elements of the system to allow transactions to be performed correctly - this digital enablement service may include other elements, such as token service provision.

For messaging relating to such transactions - specifically, for messaging relating to transactions initiated by cardholders using payment cards - an international standard has been developed, ISO 8583. ISO 8583 defines a message format and a communication flow - using these, transaction requests and responses can be exchanged. An ISO 8583 message comprises a message type indicator (MTI), one or more bitmaps, indicating what data elements are present, and the data elements themselves (the actual information fields of the message). ISO 8583 messaging is generally used within EMV payment systems. EMV is a technical standard for smart payment cards and systems, administered by EMVCo (standards specifications are available from https://www.emvco.com/specifications/). with contact card standards based on ISO/IEC 7816 and contactless card standards based on ISO/IEC 14443. An EMV transaction has multiple stages - the detail of each transaction stage is not significant here, but is discussed (for example) at https://www.emvco.com/specifications/ - but if a transaction is to be submitted for authorization a transaction proof will be generated in the form of an application cryptogram (AC), specifically here an Authorization Request Cryptogram (ARCQ) when a transaction is agreed between payment device and terminal and is to be submitted for authorisation. The application cryptogram identifies all the details of a transaction that the authorizer of the transaction is expected to need, and provides this in an encrypted form which the authorizer is also able to decrypt. The application cryptogram also provides confirmation that the cardholder has approved the transaction to proceed in the form indicated - the application cryptogram is provided at the cardholder device and the encryption process is carried out by processes acting on behalf of the cardholder.

Generally, the tokenisation process is carried out by a transaction scheme or an appropriate service provider with the permission of the payment card issuer (the issuing bank with which the cardholder has an account). Tokenised transactions are routed in the transaction scheme so that the primary account number (PAN) associated with the tokenised card can be recovered from a digital vault, also called token vault (TV), allowing normal processing of the transaction. The data associating the issuing bank and the digital wallet provider (or token requestor) where a token is stored is maintained at a data centre within a distributed transaction systems, and can be used to identify at an existing moment tokens associated with a specific issuing bank.

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

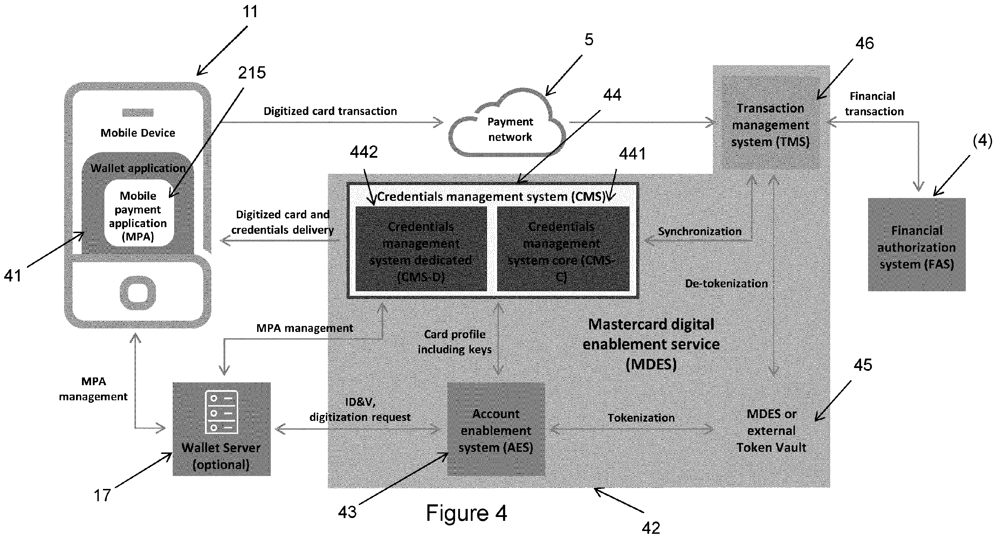

Figure 4 shows elements of a transaction infrastructure to support digitized payments from a mobile device in more detail. This Figure shows as a specific example the applicant's Mastercard Cloud-Based Payment (MCBP) architecture - this is exemplary rather than specific to the disclosure, and illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11.

The Mastercard Digital Enablement Service (MDES) 42 performs a variety of functions to support mobile payments and digitized transactions. As indicated above, the MDES 42 is exemplary only - other embodiments may use digitization, tokenization and provisioning services associated with other transaction processing infrastructures, for example. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenized transactions so that they can be processed through the transaction scheme as for conventional card transactions. The following functional elements shown within the MDES 42: the Account Enablement System (AES) 43, the Credentials Management System (CMS) 44, the Token Vault 45, and the Transaction Management System (TMS) 46. These will be described briefly below.

The Account Enablement System (AES) 43 is used in card digitization and user establishment. It will interact with the mobile payment application (here through the wallet server 17) for card digitization requests, and it will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenized transactions, the MDES 42 will reference the Token Vault 45 for detokenization, and tokenization of a card will result in creation of a new entry (Token-PAN) in the Token Vault 45.

Transaction Management System (TMS) 46 is used when processing tokenized transactions. If a transaction is identified by the transaction scheme as being tokenized, it is routed to the TMS 46 which detokenizes the transaction, establishing which PAN corresponds to the current transacted Token, by using the Token Vault 45. The detokenized transaction is then routed based on PAN to the issuer (here represented by Financial Authorisation System 4) for authorisation in the conventional manner. The TMS 46 also interacts with the CMS 44 to ensure synchronisation in relation to the cardholder account and credentials.

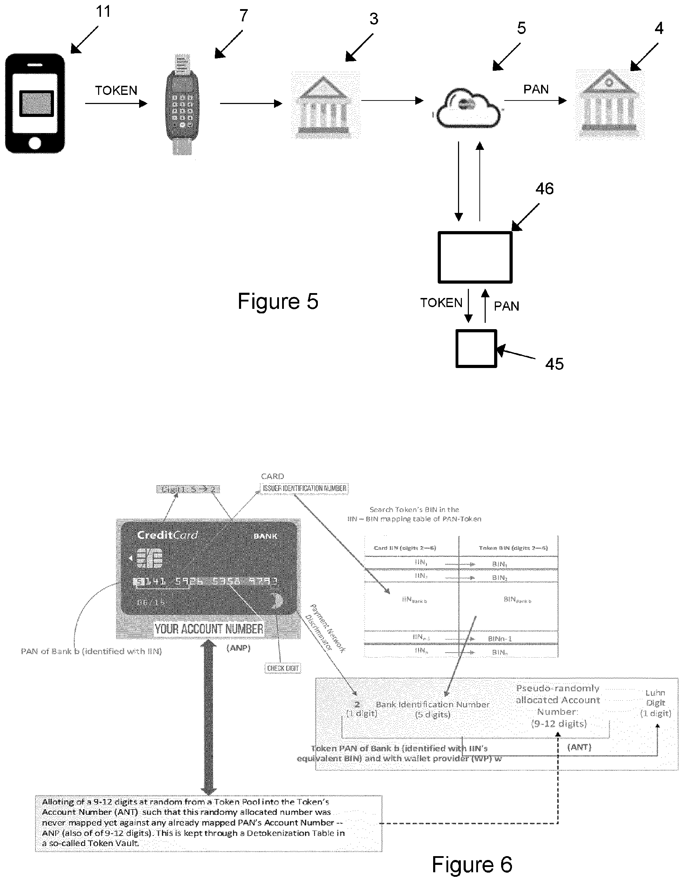

Figure 5 illustrates the steps involved in a digital transaction in relation to the use of tokens. A digital transaction is performed - here between a digital card in a mobile wallet of a mobile phone 11 and a point-of-sale terminal 7 in a contactless transaction - using a token in place of the PAN corresponding to the digital card. In order to be able to perform the transaction, the consumer must have authenticated themself as the legitimate owner of the mobile wallet, and will also have selected a digital card from the mobile wallet to be used. If this card is tokenized, this establishes that when the transaction is presented for authorization, it will pass through an appropriate path in the payment network 5 that will lead to detokenization of the token. The transaction is performed between merchant's terminal 7, acquirer processor 3, and payment scheme 5 processor in a similar way to a chip-and-PIN transaction, but with the token performing the role of the PAN. Since the cryptogram produced by 11 is verified by (with referring to Figure 3) TMS of 7 (instead of FAS of the issuer) this means that the token takes the place of the PAN in the material encrypted in the application cryptogram generated by the mobile wallet as non-repudiable proof of the transaction. This cryptogram will also include various details of the payment and associated business conditions, and also a record of cardholder authentication's status on the device 11 (by indication of Consumer Device Cardholder Verification Method - CDCVM's status "True/False").

The transaction passes through the normal path for authorisation - from the point-of-sale terminal 7 through the acquiring bank 3 to the payment network 5. In practice, it will be the acquirer 3 that directs the transaction to the appropriate payment network 5 (based on the BIN number at the start of the token - this is discussed further below), and the payment network 5 will then direct the transaction to the appropriate TMS 46 on determining that the BIN points to a particular Token Range. Conventionally, the transaction management system 46 interacting with the token vault 45 carries out detokenization, here using a detokenization table kept in the token vault where the token and the PAN are stored against each other, the PAN is recovered and the transaction can be authorised by the issuer in the normal manner after the authorization message request has been reconfigured with the PAN taken the place of the Token (embodiments of the present disclosure will discuss arrangements for detokenization other than use of a central token vault). Verification of the application cryptogram establishes that the transaction has been initiated by an authentic mobile wallet and one of its stored digital cards, hosted by a secure device, and that the cardholder has approved the transaction (using a CDCVM - such as fingerprint or facial pattern) to do so. The PAN is therefore used as in a normal transaction to indicate to the Issuer the source of funds (and the issuer for authorization of the transaction), but the use of a token "hardens" the PAN (in security terms) against eavesdropping attacks on the contactless channel between mobile phone 11 and the POI contactless terminal 7.

There are a collection of interacting features that are used to provide security for digital payments. Tokenization is used to protect the PAN in transaction channels. A digital card is authenticated to the payment network through application cryptogram verification, and to a point-of-sale terminal through Combined Data Authentication (CDA) through EMV processes (EMVCo provides standardization of processes for payment networks, with standards available from emvco.com). Cardholder verification is provided through a Consumer Device Cardholder Verification Method (CDCVM), and its result is included in the computation of the application cryptogram.

A conventional approach to tokenization will now be described with reference to Figure 6.

The allocation of a token to a PAN uses randomness - strictly, a pseudo-random permutation - in a keyless encryption function for which the encryption and decryption domains of Account Numbers represented over 9 to 12 digits are the same, and on allocation of a token, the token is removed from the token pool so that the same token cannot be allocated to two different PANs, to the same PAN in two different devices, or to the same PAN for interaction of the mobile app on two different channels.

| | Digit 1 | Digits 2-6 | Digits 7-18 (max) | Last Digit (e.g., 19) |
|---|---|---|---|---|
| | Payment Scheme Number | Issuer/Bank Identification Number (IIN/BIN) | Account Number (AN) | Luhn Digit |
| PAN | 5 | IIN | ANP (Account Number of PAN) as written in the physical card's PAN | X |
| Token 1 | 2 | BIN | ANT (Account Number of Token) randomly allocated by MDES with uniqueness for an ANP. | Y |

Table 1 - Digit significance in PAN and conventional EMV token

Table 1 shows how the pseudo-random permutation process of conventional EMV works in generating the digits of a token. This is broken down visually in Figure 6, and explained in more detail below. The first digit is simply a payment scheme number, so that tokens - as for PANs - can immediately be directed into the correct payment scheme without any complexity for the initial routing. The payment scheme will consequently receive only the correct PANs and tokens, and will know which is a PAN and which is a token.

The second tranche of digits from 2-6 identifies the issuing financial institution. In a PAN, this is an Issuer Identification Number (IIN) - these are publicly known numbers. Each scheme provider will have a matching Bank Identification Number (BIN) for a digital card product - these numbers, which are typically not well-known, are distributed by scheme providers to participating financial institutions to allow digitized transactions to be managed through arrangements such as MDES (as described above). While an IIN and a BIN will relate to the same financial institution, they will typically be mapped to different account ranges for payment card products and corresponding digital products.

The third tranche of digits from digits 7-18 (the total number of digits in this field may differ for different card products between 9 and 12 digits) represents an account number for a PAN and an Account Number of Token (ANT) for a token. The generation of an account number is up to an individual issuer and may be determined in a large number of ways (outside the scope of this discussion). An ANT is pseudo-randomly assigned from an Account Number Pool of available ANTs allotted for the equivalent card product's PAN. The mapping between the account number and the corresponding ANT needs to be kept secure, as discussed further below - it also needs to be made unavailable for use by any other PAN (and not to have already been used by another PAN). The final digit of either a card or a token is a Luhn check digit - this is simply calculated over the digits of the PAN or the token using the Luhn algorithm.

In this conventional approach, the mapping between PAN and token is kept in a Token Vault - while some digits of the token can be determined as needed, the mapping between the account number of the PAN and the ANT cannot be. Difficulties of this approach are the need to check on each token allocation that the token has not already been allocated, and need to keep all elements of the PAN to token mapping at a security level appropriate to encrypted data, which is resource consuming and expensive. A very high security level would require token vaults needing either to be secured in Hardware Security Modules (HSMs), which is an expensive solution, or to be stored in an encrypted form, which leads to further time consumption with a decryption step, which is significant as this is time added to the processing of a transaction. Moreover, this type of approach would not address all potential concerns relating to confidentiality of the token (since the owner of the token - the bank or issuer - must rely on the payment scheme provider to hold detokenization information with sufficient security) or for privacy of the token (for similar reasons).

One approach that can contribute to addressing such concerns is by replacing the pseudo-random allocation of tokens with a process in which the ANT is calculated from the account number using a keyed cryptographic mechanism. The applicant's co-pending patent application PCT/US24/043321 entitled "Tokenization and Detokenization" and filed on 22nd August 2024 teaches such processes using format preserving encryption (https://en.wikipedia.org/wiki/Format-preserving_encryption) - the disclosure of this document is incorporated by reference to the extent permitted by applicable law. Such processes can be used to provide an input that has the same format as the output. For an ANT to meet the same requirements as an ANP, it will need not only to have the same format as an ANP, it will also need to obey the same rules as an ANP, as otherwise this may disrupt the transaction flow, but will also need to be recognised as an ANT. Collisions should be avoided (which can be achieved if permutation is strictly injective) and the permutation will be pseudo-random in order to achieve compliance with the necessary rules. Here, there is also the useful constraint that operations are carried out on only integer numbers (decimal) in a finite input interval.

Using such a technique, the resulting ANT can preserve the restrictions of the input set of PAN account numbers, and in this way the token can be used the same way as a PAN - specifically here, it can be directly accommodated in the DE2 message field of a 0100-authorization message according to the ISO-8583 standard (or any future equivalent). The token is therefore effective to route the transaction from the merchant's POS to the TSP (as described above for MDES), directly. On arrival at the TSP during a payment authorization transaction, the TSP will unpack the token and decrypt the ANT into the account number of the PAN and recover the PAN, without any need to refer to a detokenization table with a token-PAN mapping. Using this approach the PAN can be encrypted to become an ISO-8583 token - a process that can be installed on a mobile device by appropriate personalization or carried out in a token server.

Embodiments described below use two different types of format preserving encryption - one, referred to below as Field Preserving Encryption (shortened here to FPE), operates across the entire field (so, the whole PAN account number), and is adapted to computation on the fly; and the other, referred to below as Digit-by-Digit Encryption (shortened here to DyDE), operates digit-by-digit and is particularly suited to pre-computation. Below embodiments of the disclosure are described with reference to both types of format preserving encryption. Before this, descriptions of an FPE and a DyDE method will be provided, after a basic mechanism, the tweakable block cipher, is first described. This type of construct is discussed by Liskov, Rivest, and Wagner in the paper "Tweakable Block Ciphers", Journal of Cryptology, Volume 24, pages 588-613, (2011). Such a tweak can be used to provide a permutation on an input set while preserving its format.

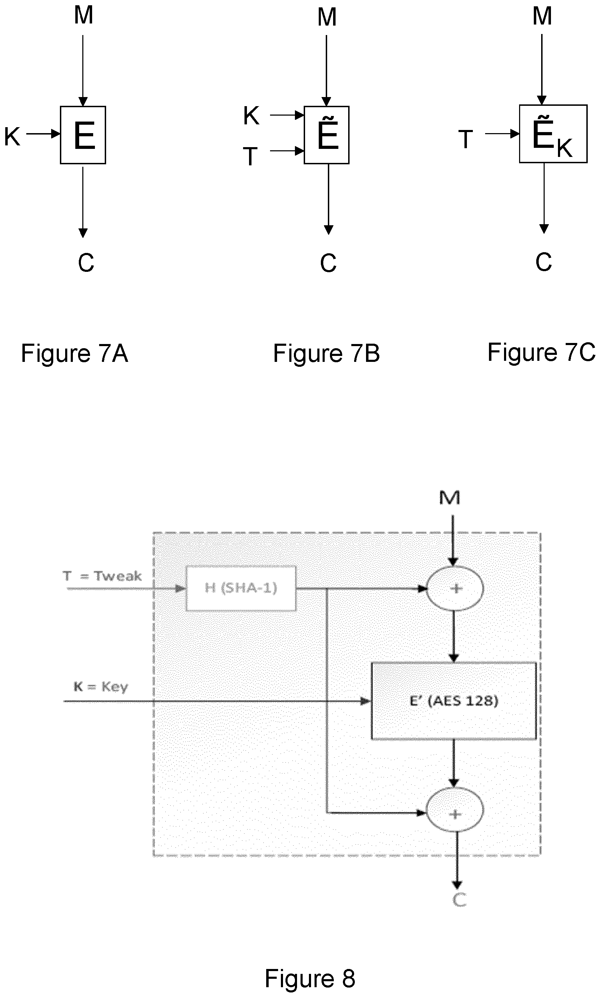

The nature and operation of a tweakable block cipher is shown in Figures 7A, 7B, 7C and 8. Figure 7A shows a standard block cipher E (such as AES 128, SM4, GOST 34.12-2018) - these are commonly implemented as 128-bit block ciphers with a 128-256 bit key. These are all based on the same general mathematical approach (substitution-permutation network) and encrypt a message M under the control of a key K to yield a ciphertext C.

Modification of a standard block cipher E to give a tweakable block cipher $\tilde{E}$ is shown in Figure 7B. This encrypts a message M under control of both a key K and a "tweak" T to yield the ciphertext C. The tweak T ensures that the ciphertext output C differs from one execution to the next from the same input M. This type of modification is known in other contexts - with an initialisation vector (IV) for a standard block cipher output in CBC mode, and with a nonce for (for example) a similar cipher in OCB mode - but can be used very flexibly in this specific context. The "tweak" T may even be public, it can be changed on a much shorter timescale than key renewal, and it works at the level of primitives rather than higher modes of operation (such as CBC and OCB modes). A tweakable block cipher may also be represented $\tilde{E}_K$ as shown in Figure 7C, with the key K treated as melted into the encrypting box logic. A tweakable block cipher has the general signature:

$$E': \{0,1\}^k \times \{0,1\}^t \times \{0,1\}^n \rightarrow \{0,1\}^n,$$

wherein

k = 128 is the key length in bits
t = 128-512 is the tweak length in bits
n is the binary length of a number in binary notation, and it is the block length of a symmetric encryption algorithm

An exemplary method of transforming the block cipher E' into a tweakable cipher is shown in Figure 8. Note that here, as elsewhere below, 128 bits will be assumed to be the block length. Figure 8 shows an efficient method for transferring the AES-128 block cipher into a tweakable cipher using the SHA-1 function as a tweaking parameter. In the Figure 8 arrangement, E' is a trusted 128-bit length block cipher (such as AES-128) whereas H is a hash function with output truncated to the length of the block cipher.

With this background, embodiments for using digit-by-digit encryption (DyDE) and field preserving encryption (FPE) in the context of tokenisation can now be discussed. For a DyDE embodiment using pre-computation, a block cipher (such as AES-128) is used here with interdependent pre-computation of the cryptograms for each decimal integer number in the set {0, 1, 2, 3, 4, 5, 6, 7, 8, 9}, such that they will be encrypted in the same set. For an on-the-fly FPE embodiment, there is here used the "Hasty Pudding Cipher" (HPC) of Richard Schroeppel. The approach taken by HPC prevents having the same plaintext, represented as an integer with 9 to 12 digits in the range [00..00, 99...99] result in the same ciphertext of 9 to 12 digits in the range [00..00, 99...99] by bringing the tweak/spice down to the primitive block-cipher level, instead of incorporating it only at the higher modes-of-operation levels (such as CBC and OBC modes). Other tweakable block ciphers that preserve format exist, typically used for long strings, (e.g. the Korean standard Format-preserving Encryption Algorithm (FEA), NIST's standards FF1 and FF3-1) and could be used in alternative embodiments.

Specific mechanisms for generation of a spice are not provided in detail here as they are not central to the present disclosure - a detailed description of how to provide a spice suitable for this technical context is provided in the applicant's co-pending patent application PCT/US24/043321 as referenced above. One possibility is for the spice to be determined by system parameters for the user system - such as ownership, a security score, expiry date - but using parameterization tables which are kept secret in an HSM, though which can be refreshed regularly to reflect changes.

Various approaches can be taken to provide a key for the cryptographic method. One approach is similar to that used for key generation in existing EMV methods. This is to use a master key (here $K_{TSP}$) for the payment network which is then diversified using parameters for the issuer (here to produce $K_{IIN}$) and then for the specific payment product to produce the key for the cryptographic mechanism (here $K_{BIN}$). Other approaches can be used - for example, a key could be selected pseudo-randomly from a key set specific to a device-TSP channel, with a key list that is unique and specific to the channel.

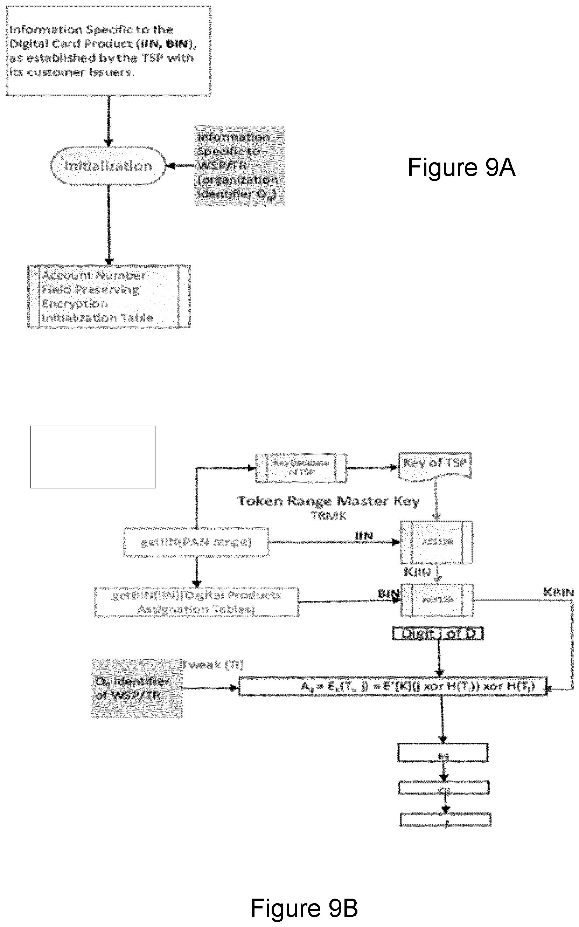

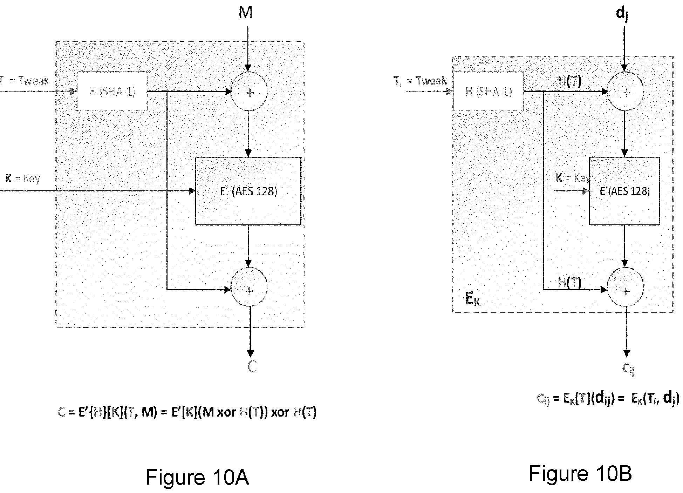

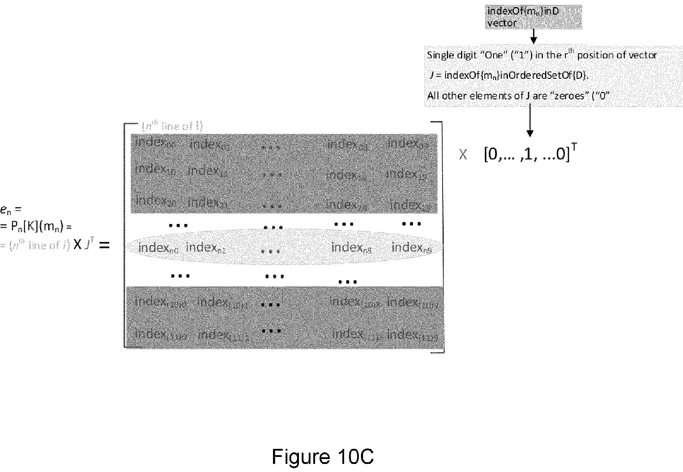

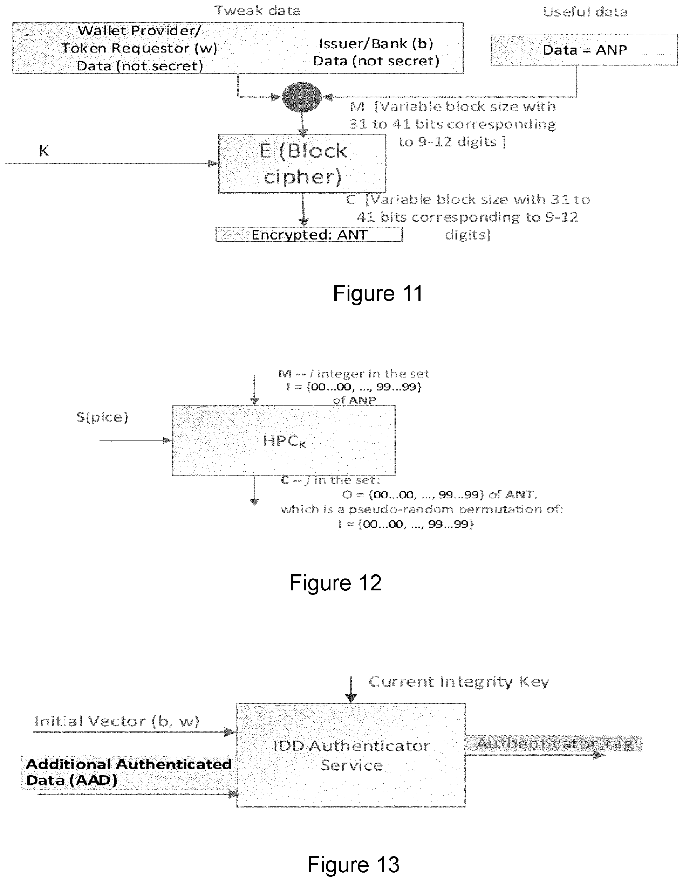

The two exemplary methods for providing a cryptographic mechanism will now be described in detail - the AES-128 with SHA-1 hash function in the DyDE "serial" approach using pre-computation will be described with reference to Figures 9 and 10, and the FPE "block" approach using HPC and on-the-fly computation will be described with reference to Figures 11 to 13.

In the first method, format preserving encryption parameters per wallet provider and BIN product range are precomputed and stored in the Hardware Security Module (HSM) used by the payment network to store sensitive material. This method therefore provides a trade-off between use of HSM memory space and detokenization time needed at the payment transaction authorization stage. Moreover, it is simple to use and requires no special cryptographic computation. It operates on an input space which simply consists of the decimal digits, namely {0, 1, 2, 3, 4, 5, 6, 7, 8, 9}. Essentially, the method creates an output which is a permutation of these digits, with the specific permutation being determined by the set of parameters used in determining the IV/Spice - this allows the permutation to vary depending on factors such as who is asking for the tokenization, and what kind of device and payment product is involved (in particular, what are the security considerations for that device).

The tokenisation process - including its pre-computation stage at the system setup - may here be initiated when tokenisation is requested for a Wallet Provider (w) and Token Requestor (r) pair - reflecting a valid indexOwnership in the appropriate Token Ownership Table, as discussed above - this typically requires tokenization of all payment cards (i.e., all their PANs) hosting a certain payment card product p of a bank b (here, a specific IIN) for a certain BIN range of the corresponding digital product (according to the IIN-BIN tables as agreed between payment network provider and issuer (see Figure 6). The corresponding Tokens are provided for provisioning within a category of consumer devices with a security characterization given by the indexSecurity in the Security Score Table. Each PAN's encrypted Token would be set in the consumer's device corresponding to their identity. All Tokens are given an expiration date as indicated in the Expiry Date Table or as computed based on the tokenization date.

The material needed for the tweak is established using the approach indicated above, and involves a combination of tokenization parameters from the tables corresponding to the processing/security/operational configuration desired by the issuer for that token category through the triple (indexOwnership, indexSecurity, indexExpiry) as discussed above. Here, indexSecurity corresponds to the Payment Token Profile indicated as desired by the issuer in a tokenization request for the digital product, as explained above. The IIN-BIN combination is set to the desired card-digital product pairing wished for by the issuer for their customers equipped with that Payment Token Profile. In this way, an initial tweak as described above is established. How this initial tweak is used in specific embodiments is described further below.

A first method (DyDE), using precomputation, will now be described with reference to Figures 9A, 9B (for DyDE pre-computation of the initialization matrix /), 10A, 10B (for DxDE digit-by-digit serialization technique of the account number of the PAN in the corresponding digits of ANT) and 10C (for the encryption process of $n^{th}$ digit of the account number of the PAN) - this method is also described in the applicant's co-pending patent application PCT/US24/043321. This involves only one initialization computation for each wallet provider/token requestor participating, and requires only limited computation and storage. An initialization matrix is established for each wallet provider - this has a similar footprint to an Elliptic Curve cryptographic key - and positions in the matrix are used to modify the tweak, as is the identity of the owner. This approach uses the following set of principles:

a. There is a $1^{st}$ ordered set of digits, which consists of the increasing integers between 0 and 9. This is the interval [0,9], also denoted:

$$D = \{d_i\}i = [0,9] = \{0, 1, 2, 3, 4, 5, 6, 7, 8, 9\},$$

wherein: For an $i < j$ in [0,9] then $d_i < d_j$ in [0,9],

b. There is a $2^{nd}$ digit collection, denoted $P = [0,9]^{12}$, which refers to:

i. Cartesian product of:

$$P = [0,9] \times [0,9] \times \ldots \times [0,9] \ (12 \ \text{times}) = D^{12},$$

wherein:

1. One element of the cartesian product P is a string of 12 digits $d_0 d_1 d_2 \ldots d_9 d_{10} d_{11} \in D_{12}$, $d_i \in D$, $\forall i \in L = [0,11]$.
2. Digit in $k^{th}$ position of the digit collection P may repeat in another position $j^{th}$ of the digit collection P, i.e., it may be that $d_k = d_j$, $\forall k \in L$, and $k \neq j \in L$.
3. Each digit of the string is assigned an increasing index from the left of the string to the right of the string, i.e.: $0^{th}$, $1^{st}$, $2^{nd}$, $3^{rd}$, $4^{th}$, ...., $9^{th}$, $10^{th}$, and $11^{th}$.

c. One digit collection is said to be different from another digit collection if either the string representing the first includes no digits present in the second, or digits are the same, but their presence in the strings has different indexes.

The element to be anonymised in the token needs to have the form of the Account Number of a PAN (ANP) - this consists of a string of 12 digits in P. ANP is used to form together with the Payment Network Discriminator (on 1 digit), the Issuer Identification Number (IIN, on 5 digits), and the Luhn Check Digit (on 1 digit) -- the PAN (of between 16-19 digits) of a credit/debit card. The following discussion will refer only to the case of a PAN of 19 digits, with p = 12 (for its ANP). Any other length cases of ANP, with p = 9, 10, or 11 respectively, can be treated similarly and are not discussed specifically below.

Each digit $d_l$, at any index $l \in L = [0,11]$ of the ANP string, is allotted:

- Pseudo-randomly from D.
- Independently from one another.
- With possibly the same value of another digit at a different index in the ANP's digit collection P.

ANP will be NOT allotted from an increasing ordered set, one value after another. ANP can be seen as being chosen at random from integers $[0, 10^{13})$, with little probability of guessing by an attacker.

The approach taken here uses a method for encrypting one digit in D into another digit in D, so that the ANP string of 12 digits from a given digit collection can be encrypted into a cipher string with the same digit length (i.e., also 12 digits), referred to as ANT (Account Number of Token), which is in a different digit collection. A suitable method for this is that described by Black and Rogaway in "Ciphers with Arbitrary Finite Domains", Cryptology ePrint Archive, Paper 2001/012, 2001. This method uses the following concepts:

a. *Pseudo-random keyed permutation* $P_l[K](d_l)$, which is used as a digit-by-digit encryption/decryption mechanism for ANP. This can be considered as effectively a stream cipher used "per digit" instead of a stream cipher per bit. A decryption server (like TSP) can decrypt each digit of the ANT with its index in the digit collection separately from the other digits of the ANT. Thus, parallelization is possible for time optimization of TSP processing.

b. Complementary block cipher E(ncryption)/D(ecryption), with:

i. Block-length of $n$ = 128 bits.
ii. Key K, the size $k$ of which is 128 bits.
iii. Tweak vector T, used as a dispersion tool for encrypting same digit in different cipher images. The principles described above can be used to construct the tweak vector.
iv. Hash function H, for compressing in a collision-resistant way the tweaking data considered in dispersion.

An initialization process to establish this approach is shown in Figures 9A and 9B, with the specific computational approach used for a serialized encrypted digit illustrated at the matrix level in Figure 10A and at the digit level in Figure 10B, with the resulting initialization table I shown in Figure 10C. The approach will now be described in detail.

The general approach to initialization is indicated in Figure 9A. Information specific to the card product and information specific to the wallet provider (or other token requestor) are used as inputs to an initialization process that results in an initialization table. Figure 9B shows how a key, diversified by IIN and BIN from a token range master key TRMK to provide a key input KBIN is used in conjunction with a tweak derived from the token provider identifier as inputs to the generating algorithm. This process operates for each digit of the resulting table I, with the key applying to each computation but with the tweak T varying for each digit.

This Account Number Field Preserving Encryption Initialization Table I allows a TSP to compute one 12 digit collection from another - specifically, the Account Number of a Token (ANT) from the Account Number of a PAN (ANP). The creation of this table is shown at the matrix level in Figure 10A, at the individual matrix element level in Figure 10B, with the resulting table I shown in Figure 10C. The $k^{th}$ digit in an ANP's digit collection P can be any $j^{th}$ element $d_j$ in D. There can be one or more duplicates in the ANP's digit collection P, using the same digit from D. However, even if $k^{th}$ element and $l^{th}$ elements of $P = [0,9]^{12}$ may have same value $d_j$ from D, their corresponding tweak vectors $T_k$ and $T_l$ will be different. This is because the tweak vector includes the index of element $d_j$ index in digit collection P, together with other elements (e.g., which organization Oq owns the token) as described above:

$$T_i = i \text{ (index of element } d_j \text{ in the ordered set of L) } || \ldots$$

(e.g., $O_q$'s identifier)

The above construct essentially comprises a tweaked AES128 cipher, using a SHA-1 hash function, and a tweak vector T. The choice of the block cipher E and of the hash function H can be made so that encryption and decryption with hashed data can be performed fastest on the host server that performs the encryption (during FPE setup) and cryptograms' ordering. Mathematically, the method is as follows.

Let $Px[K](d_{ij})$ be a 1-digit cipher as a pseudo-random permutation with:

- Domain D, i.e., $d_{ij} \in D$.
- Wherein one-digit $d_{ij}$ of D is encrypted into another one-digit $d'_{ij}$ of D, i.e.:

$$\forall d_{ij} \in D, \text{ then } Px[K](d_{ij}) = d'_{ij,}$$

where: $d'_{ij} \in D$. *Example:* $d_{ij} = 2 \rightarrow d'_{ij} = 7$.
- $i \in L = \{0, 1, \ldots ,9, 10, 11\}$, for *each* chosen and fixed element of the digit collection.
- $\forall j \in D = \{0, 1, \ldots ,9\}$, for the corresponding chosen and fix i position in the digit collection, of a digit $dj$ of D.

Step 1:
For this 1-digit cipher, perform an initialization stage of the following A matrix:
For each $i \in L$, compute:

$$Ti = i \text{ (i.e, indexOf(dj, L)) } || ID\_O_q || \ldots$$

For each $j \in D$, compute:

$$A_{ij} = E_K(T_i, j) = E'[K](j \text{ xor } H(T_i)) \text{ xor } H(T_i)$$

Step 2:

$$\text{Create matrix } A = \{a_{ij}\}, \forall i \in L, j \in D,$$

as illustrated below:

$$A = \begin{bmatrix} a_{00} = E_K(T_0, 0) & a_{01} = E_K(T_0, 1) & \cdots & a_{08} = E_K(T_0, 8) & a_{09} = E_K(T_0, 9) \\ a_{10} = E_K(T_1, 0) & a_{11} = E_K(T_1, 1) & \cdots & a_{18} = E_K(T_1, 8) & a_{19} = E_K(T_1, 9) \\ a_{20} = E_K(T_2, 0) & a_{21} = E_K(T_2, 1) & \cdots & a_{28} = E_K(T_2, 8) & a_{29} = E_K(T_2, 9) \\ \cdots & \cdots & \cdots \cdots & & \cdots \\ a_{90} = E_K(T_9, 0) & a_{91} = E_K(T_9, 1) & \cdots & a_{98} = E_K(T_9, 8) & a_{99} = E_K(T_9, 9) \\ a_{(10)0} = E_K(T_{10}, 0) & a_{(10)1} = E_K(T_{10}, 1) & \cdots & a_{(10)8} = E_K(T_{10}, 8) & a_{(10)9} = E_K(T_{10}, 9) \\ a_{(11)0} = E_K(T_{11}, 0) & a_{(11)1} = E_K(T_{11}, 1) & \cdots & a_{(11)8} = E_K(T_{11}, 8) & a_{(11)9} = E_K(T_{11}, 9) \end{bmatrix}$$

### Matrix A

Step 3:

For each line $i \in L$ and each column $j \in D$ of matrix A, rename the element $a_{ij}$ of matrix A by:

- Indexing the column number, and
- Parametrizing the corresponding tweak per line, i.e.:

$$E_K(T_i, j) = E'[K](j \text{ xor } H(T_i)) \text{ xor } H(T_i) = b_j^{T_i},$$

and since:

- $E'[K]$ is the same formula, both as algorithm and as value of the key K, and
- $H(T_i)$ is xor-ed in the cryptogram,

then for all elements of matrix A, we denote the elements of a new matrix B as:

$$b_{ij} = E^{T_i}(j),$$

or even more simply, as:

$$b_{ij} = E_j^{T_i},$$

where the encryption E itself is parameterized through the key K, i.e., $E_K$ instead of E.

This results in Matrix B, shown below (E is used instead of $E_K$ for clarity)

$$B = \begin{bmatrix} b_{00} = E_0^{T_0} & b_{01} = E_1^{T_0} & \cdots & b_{08} = E_8^{T_0} & b_{09} = E_9^{T_0} \\ b_{10} = E_0^{T_1} & b_{11} = E_1^{T_1} & \cdots & b_{18} = E_8^{T_1} & b_{19} = E_9^{T_1} \\ b_{20} = E_0^{T_2} & b_{21} = E_1^{T_2} & \cdots & b_{28} = E_8^{T_2} & b_{29} = E_9^{T_2} \\ \cdots & \cdots & \cdots \cdots & & \cdots \\ b_{90} = E_0^{T_9} & b_{91} = E_1^{T_9} & \cdots & b_{98} = E_8^{T_9} & b_{99} = E_9^{T_9} \\ b_{(10)0} = E_0^{T_{10}} & b_{(10)1} = E_1^{T_{10}} & \cdots & b_{(10)8} = E_8^{T_{10}} & b_{(10)9} = E_9^{T_{10}} \\ b_{(11)0} = E_0^{T_{11}} & b_{(11)1} = E_1^{T_{11}} & \cdots & b_{(11)8} = E_8^{T_{11}} & b_{(11)9} = E_9^{T_{11}} \end{bmatrix}$$

### Matrix B

Step 4:

Every chosen line $Ci$ of B, $i \in L$, is a vector paired to a tweak value $T_i$, and is regarded as a a an unordered string set $\{b_{i,j}\}$. It has as data elements the integer equivalent values of the corresponding cryptograms of that line $i$, with every column $j = 0, \ldots ,9$, which is corresponding to a digit in the ordered set of digits D. Such lines are as indicated below:

$$\mathbf{Ci} = \begin{bmatrix} C_{i0} = \text{Integer of} \\ b_{i0} = E_0^{T_i} & C_{i1} = \text{Integer of} \\ b_{i1} = E_1^{T_i} & \cdots & C_{i8} = \text{Integer of} \\ b_{i8} = E_8^{T_i} & C_{i9} = \text{Integer of} \\ b_{i9} = E_9^{T_i} \end{bmatrix} =$$

$$= \begin{bmatrix} C_{i0} & C_{i1} & \cdots & C_{i8} & C_{i9} \end{bmatrix}$$

We can denote:

$$\text{index}_{ij} = \text{indexOf}(C_{*j})\text{inOrderedSetOf}\{C_{ij}, [j= 0,9]\},$$

wherein:

$$\text{OrderedSetOf}\{Cij, [j= 0,9]\},$$

consists of:

$$C_{i,l\_0} < C_{i,l\_1} < \ldots < C_{i,l\_8} < C_{i,l\_9}$$

Thus, by replacing each line of cryptograms through its line of indexes, the result is this matrix I.

$$I = \begin{bmatrix} \text{index}_{00} & \text{index}_{01} & \cdots & \text{index}_{08} & \text{index}_{09} \\ \text{index}_{10} & \text{index}_{11} & \cdots & \text{index}_{18} & \text{index}_{19} \\ \text{index}_{20} & \text{index}_{21} & \cdots & \text{index}_{28} & \text{index}_{29} \\ \cdots & \cdots & \cdots & \cdots & \cdots \\ \text{index}_{90} & \text{index}_{91} & \cdots & \text{index}_{98} & \text{index}_{99} \\ \text{index}_{(10)0} & \text{index}_{(10)1} & & \text{index}_{(10)8} & \text{index}_{(10)9} \\ \text{index}_{(11)0} & \text{index}_{(11)1} & & \text{index}_{(11)8} & \text{index}_{(11)9} \end{bmatrix}$$

Matrix I

Step 5:

Steps 1-4 are the initialization steps. These are performed by the TSP to initialize the digit-by-digit encryption/decryption process through the matrix I for an organization ID_$O_q$. These can then be used for encryption and decryption of specific tokens that apply to this organization.

An Account Number of PAN of this organization with:

$$\text{ANP} = m_0 m_1 m_2 \ldots m_9 m_{10} m_{11}$$

can now be Field Preserved Encrypted (*FPE*) to get ANT from ANP.

This ANT encrypted value can be personalized, together with the other data elements, namely: -

- Payment Network Discriminator-- PND,
- Bank Identification Number-- BIN, and
- Luhn Digit - LD,

as Token, with the following form:

$$\text{Token} = \text{PND} \parallel \text{BIN} \parallel \text{ANT} \parallel \text{LN}$$

and this can be used in the place of a PAN in an authorization message (DE2 field of an EMV transaction communication).

Step 6:

The encryption process - encryption of the the **ANP** string of digits into the **ANT** string of digits - proceeds as follows:

$$
\begin{aligned}
\text{ANT} \quad &= FPE[K](\text{ANP}) = \\
&= FPE[K](m_0 m_1 m_2 \ldots m_9 m_{10} m_{11}) = \\
&= P_0[K](m_0) P_1[K](m_1) P_2[K](m_2) \ldots P_{10}[K](m_{10}) P_{11}[K](m_{11}) = \\
&= e_0 e_1 e_2 \ldots e_9 e_{10} e_{11}
\end{aligned}
$$

where the element in the $n^{\text{th}}$ position of ANT, with $n = 0, 1, \ldots, 9, 10, 11$, is taking the value of an element in D through the keyed pseudo-random permutation $P_n[K](*)$ as follows:

$$e_n = P_n[K](m_n) = I_n \, X \, (\text{indexOf}\{m_n\}\text{inD})^{\text{T}}.$$

This represents the vectorial product of:

- $n^{\text{th}}$ line of the organization's $O_q$ initialization matrix $I$, denoted $I_n$, with
- Transposed vector $\text{indexOf}\{m_n\}\text{inD} = [0, \ldots, 1, \ldots 0]^{\text{T}}$, consisting of:

    i) nine digits of zero ("0"), and
    ii) one single digit one ("1") in the position
    $\text{indexOf}\{m_n\}\text{inOrderedSetOf}\{D\}$.

This is illustrated in Figure 10C.

Step 7:

Decryption of the ANT string of digits back into the ANP to retrieve the PAN from the Token in the TSP processor then takes place as follows:

$$
\begin{aligned}
\text{ANP} \quad &= FPE^{-1}[K](\text{ANP}) = \\
&= FPE^{-1}[K](e_0 e_1 e_2 \ldots e_9 e_{10} e_{11}) = \\
&= P^{-1}_0[K](e_0) P^{-1}_1[K](e_1) P^{-1}_2[K](e_2) \ldots P^{-1}_{10}[K](e_{10}) P^{-1}_{11}[K](e_{11}) = \\
&= m_0 m_1 m_2 \ldots m_9 m_{10} m_{11}
\end{aligned}
$$

where the element in the $j^{\text{th}}$ position of ANP, with $j = 0, 1, \ldots, 9, 10, 11$, takes the value of an element in D through the inverse of the keyed pseudo-random permutation $P^{-1}_n[K](*)$ as follows:

$$m_j = P^{-1}_j[K](e_j) = I_n \, X \, (\text{indexOf}\{e_j\}\text{InD})^{\text{T}}.$$

Using this approach, simple tokenization and detokenization processes can be performed rapidly, as the more time consuming steps have been precomputed in the initialization process.

The second method, as described with references to Figures 11 to 13, involves on-the-fly detokenization using a "tweakable" block cipher. This is also described in the applicant's co-pending patent application PCT/US24/043321. In the specific embodiment described, the Hasty Pudding Cipher (HPC) is used, but as indicated above, another embodiment could employ a different tweakable block cipher. This approach has an even lower HSM storage demand - there is no need to store Tokenization Mapping Strings - so is appropriate if processing speed is a more available resource than HSM storage.

Referring to Figure 11, this on-the-fly approach requires a cryptographic mechanism (CM) where two parties the owner of the PAN (a bank b) and the consumer wallet provider/token requestor w controlling the Payment Token Profile in the consumer's device - participate with their identities and/or identifiers to determine the Tweak data used along with the Account Number of the PAN (ANP) as input in the block cipher computation output of the Account Number of the Token.

These parties must both be able to perform the transformation between the ANT and the ANP in one or the other direction (for detokenization or tokenization).

For a block cipher based approach, the following features are required:

- The output set is equal to the input set (integers X of 9-12 digits in the range [00...00, ... , 99... 99];
- Outputs can be represented as (lg X/lg 2) + 1 bits, i.e., binary strings between 31 and 41 bits, with integer values represented from 31 bits to 41 bits, which means an interval of integer whose binary representation is between $2^{31}$ and $2^{41}$, or whose decimal representation is between$(10^9-1)$ and $(10^{12}-1)$
- The output structure preserves the structure of the input (format preservation).

This can be implemented as a keyed pseudo-random permutation with preservation of the structure of the output to follow the data schema of the input, i.e., a FPE algorithm with an irregular bit input between 31 bits and 41 bits instead of 16 bytes. This approach requires that the key K must be generated/created by a Trust Service Provider (TSP) trusted by both bank b and wallet provider w. This continues the partnership in security between bank b and wallet provider w extending from their cooperation in tweak data creation - such a TSP may be a service like MDES, typically trusted by both bank and wallet provider.

This mechanism of a tweakable encryption can be considered as analogous to a conventional Cipher Block Chaining mode (CBC mode) block cipher with an Initial Vector (IV) that is "tweakable data" specific to the (b, w) pair - this is the arrangement shown in Figure 11. The tweak data is not secret whereas the key K is secret, while the useful data ANP is encrypted to get ANT of the same format for tokenization.

As before, the tweak data can be considered as a second input to the block cipher beside the input data (here, the ANP). This second input again need not be secret, and its role is to perform an inner modification of the permutation used by the block cipher. A desirable property of the tweakable cipher is to have multiple diffusion with propagation of changes - desirably, one bit of change in tweakable data propagates at least three times through the cipher state, changing every bit. This tweak data hence serves much the same purpose that an Initialization Vector does for the CBC mode of a block cipher (like AES 256), or that a nonce does for the OCB mode, of a block cipher, only that it acts inner to the block permutation structure, modifying it. Consequently, one can see the block permutation as being parameterized through the secret key K ($E_K$) and all being "keyed" with the T(weak)/Spice

HPC is the choice for the embodiment discussed below, as it is particularly suitable for this purpose - though as noted above, other tweakable block ciphers could be used in different embodiments. In particular, HPC is very suitable for encrypting strings of arbitrary length into outputs of the same length - here, the need is for this to be used over a 31-41 bit range. HPC can easily be used adaptively with different block size ranges, which is significant here as ANP and ANT may vary between 9 and 12 digits:

 o tiny: <=35 bits -- for Account Numbers of PAN on:

  - 31 bits, when the BIN Ranges are up till 8 digits,
  - 34 bits, when the BIN Ranges are up till 7 digits.

 o short: 36-64 bits -- for Account Number of PAN on:

  - 37 bits, when the BIN Ranges are up till 6 digits,
  - 41 bits, when the BIN Ranges are up till 5 digits.

HPC is also believed to be resistant to quantum computing attacks, and so can be considered a Post Quantum (PQ) cryptographic algorithm.

For convenience, $HPC_K$ will be used for a version of HPC keyed by key K - this can therefore be considered to have input M (of variable block size, between 31 and 41 bits corresponding to 9-12 digits of an Account Number), spice S (as described above) and with output C (of the same block size and with a binary representation on the same number of bits as the input, or the same number of digits as M, if the representation is decimal). The alternative representations of HPC with key input K, and of $HPC_K$, are shown in Figure 13. The effect of the spice S is to increase the entropy of the cryptographic computation.

One issue arising with tokenization - and problematic for the use of detokenization tables - is that it may be necessary for speed or for local regulations to have the detokenization capability in geographies where transactions are taking place - which may require detokenization table information to be migrated from one geography to another, which creates synchronisation issues when a backup is required or when multiple parties can update token status. These problems can be avoided with a tokenization/detokenization method that allows a consumer device hosting a wallet to keep its own Token-PAN detokenization relationship specifically encrypted in the publicly readable records of the mobile app (for example, as indicated by the Application File Locator (AFL) field in EMV). In this method, CDA (Combined-with-AC-Computation Dynamic Authentication) used to authenticate information in a transaction will use for the Token certificate, wherein the Token corresponds to the PAN in the FPE specially encrypted format as described above, which will be also included in DE2 of the authorization message provided for the purpose of authorization by the issuer. The digital app in the device will sign the CDA data with the private key corresponding to that certified public key linked to the Token and not to the PAN. When the terminal verifies the CDA on the transaction data and on the AC included in the data to be signed, it has no idea that it verifies with respect to a token that encrypts the PAN but not with respect to the PAN certificate itself.

An effective strategy here is to use for spice information supplementary material that can be provided as authenticated but which is not necessarily encrypted during the transaction process. Such material can be the PAN Sequence Number (PSN) and the bank/wallet pair (b, w) - an exemplary set of spice material is provided further below. Such material for an EMV-type mobile app can be encoded in the mobile app within the FCI Issuer Discretionary Data (IDD) field with tag BF0C during personalization - this is provided back to /TSPMDES during transaction processing in File Control Information (tag 6F) for a contactless transaction or in a UCAF payload for a digital transaction (UCAF is a format used for carrying data for digital transactions as card-not-present in e-commerce). This will serve in the decryption of the Token back into a PAN. The spice information is therefore not kept secret, but it is set at personalization time and only the issuer (or a party acting for the issuer such as the MDES here) knows its purpose. Here, MDES knows what items may be added to the Spice for deciphering the Token in the PAN, and it also knows that those items are authentic, as computed by itself and that they did not change since they were personalized/added in the digital card in tag BF0C.

An exemplary tokenization process using $HPC_K$ is shown in Figure 12. This shows how for a given spice S = (PSN, ( b, w)), formed as explained above, and a secret key K, the double-parameterized algorithm $HPC^S_K$ computes the pseudo-random permutation of each integer in the range: [00...00, ... , 99... 99] of any Account Number corresponding to a given Issuer Identification Number (IIN) of a PAN family - ANP -- for a given PSN and for a certain type of card product with a wallet provider (b,w). The output j which is also an integer in the range: [00...00, ..., 99... 99] - representing the Account Number of the Token, or ANT - is computed according to the following formula:

ANT = Tweakable Block Cipher {K} [S = (PSN, (Bank b, Wallet w))] (ANP),
i.e., when the tweakable block cipher is HPC then it becomes:

$$ANT = HPC_K^S[ANP],$$

wherein the algorithm is shown as being with double parametrization: K as key (first parameter in subscript) and S as the Spice (second parameter in superscript).

This further reads as the tiny/small block encryption mode with key K of HPC on the input ANP for a given spice S formed as (PSN, pair (b,w)) as a shorten spice (the shorter the spice the smaller the encryption/decryption time). The separate elements are identified or determined as follows:

j = ANT output of the 9-12 digits of the encrypted ANP. ANP is transformed (along with other elements as indicated above) into a Token capable of performing switching for the transaction, in the set O = {00..00, ...,99..99}, corresponding to an input digit i in the same set I = {00..00, ...,99..99} of ANP that can be entered (together with the other aforementioned digits) in a plaintext PAN to respect the Field Preserving Encryption (FPE) requirement.

K = the encryption key may be computed as:

K = Derivation_Function {KSystem}[Bank b's IIN-BIN relationship]. Approaches that can be used for a Derivation_Function are not discussed herein in detail. It should be noted that an example was briefly explained above, which is only exemplary and that other conventional approaches to providing a Derivation Function can be used.

S = HPC's spice, which is computed here (in exemplary form) as a concatenation of the card's PSN, Bank's b ID (CID), Wallet $w$'s ID (WID), Token Requestor ID (TRID, the party on who's behalf WID is asking for digitization), IIN for the PANs to be tokenized, and a randomizer for injectivity, along with the PAN Expiration Date and PAN Sequence Number (PSN). This material can be provided as authenticated in the transaction but is not provided in encrypted form.

Using this approach, it is desirable to use the shortest S that provides an effective and secure result, as shortening S will shorten computation time, and hence tokenization and detokenization time.

An approach to providing spice data for detokenization is illustrated in Figure 13. This relies on the availability of the Issuer Discretionary Data (IDD) in the Token's FCI personalization data, and involves the use of an IDD Authenticator Service. This may be provided as a new service on the TSP's TMS. It consists of an AES-256 in GCM mode - the encrypted result that this produces is not used, but the Authenticator Tag resulting must be included in the FC's IDD personalization.

As previously described, the (b, w) pair is part of the information needed. b = identity of the Bank that owns the token/PAN - this will be known to the transaction scheme in providing a card PAN of a certain type (e.g., credit, debit, pre-paid) using an "IIN range" (IIN = Issuer Identification Number, usually of 5 digits, also known as a BIN = Bank Identification Number), w = Wallet Provider (WID)/Token Requestor (TRID) that manages the transferred token for its consumer, which is also known information to the transaction scheme.

The other information provided is the Additional Authenticated Data (AAD), which may include any of the following (and potentially other information of a similar type):

- ANT=E(ANP) - the implicit token-PAN mapping through tweakable encryption (ANT part of the Token).
- PAN Sequence Number
- Data about the mobile platform where the Token is hosted (for example, Security Technology Index (SE, TEE, REE, HCE), pointing to the appropriate Payment Token Profile).
- Expiration Date Index.

This information is used to generate an Authenticity Tag (AUT) - this is verified by the TSP when decrypting a mapping. The generation process uses a Current Integrity Key (CIK) for authentication and integrity. This can be provided by standard methods, for example:

- either derived from a system key for integrity and authentication, based on the PAN.
- or which can be provided by a key management network, e.g., selected pseudo-randomly from a key set specific to a device-TSP channel.

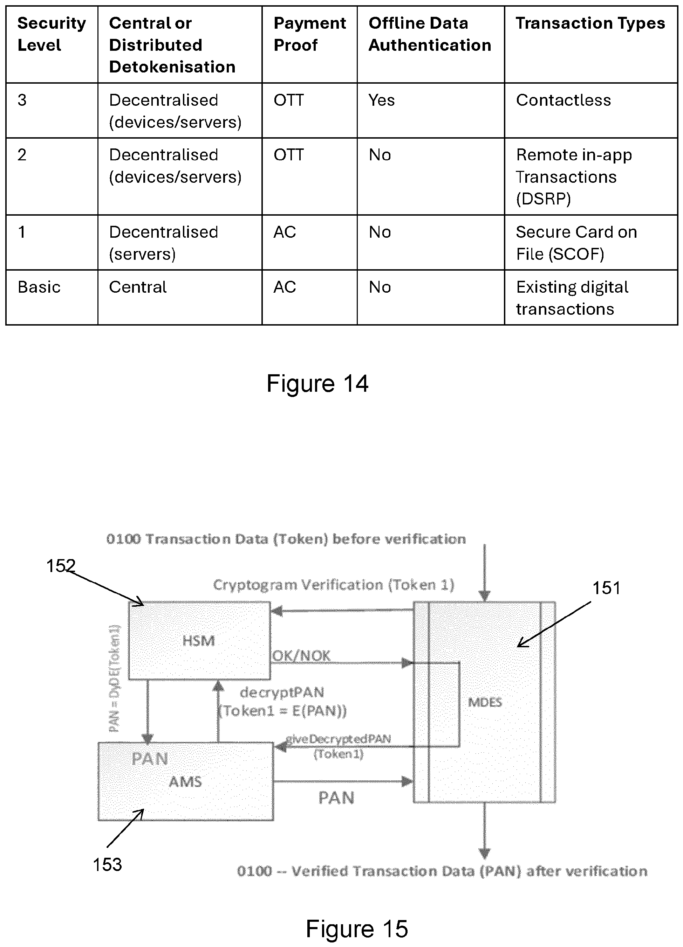

Using the format preserving encryption techniques described above, including the strategies indicated for digit-by-digit encryption (DyDE) using precomputation and field preserving encryption (FPE) for use on-the-fly, tokenisation can be managed differently depending on the security demands of the transaction type. Figure 14 indicates a variety of different security levels, and indicates how these are achieved by appropriate combination of detokenization philosophy (centralised or distributed), payment proof type, and whether offline data authentication (ODA) is used. References are used here that will be discussed in greater detail below - in particular, a different payment proof type from a standard EMVCo Application Cryptogram (AC) is used in certain cases - this is a One Time Token (OTT) of a type that will be described in greater detail below when relevant security level use cases are discussed.

In the basic case, a conventional centralized detokenization table is used, but with one significant modification. A centralized detokenization table - such as described above for MDES - is held in a generally secure environment, but it may be visible to human operatives for management operations, for example in an account management system (AMS). While this will be a generally secure environment with trusted personnel, it is possible to use format preserving encryption to make this situation more secure. The risk here is of a malicious operator copying all or part of the detokenization table. A solution is to use encryption to prevent any malicious operator from having access to any clear version of the detokenization table, by only exposing the PAN in encrypted form as an E(PAN). This also preserves user privacy in their PAN. To avoid redesign of the table, it is desirable for this encryption to be format preserving encryption, so that the E(PAN) has the format of a PAN.

This is an embodiment of the concept presented initially in Figure 1. Here, this is implemented in its most straightforward form - format preserving encryption is used simply so that what is presented to the operator is anonymised, so that the operator can evaluate proper operation of the system, but would not be able to capture information that was of more than very local (and even then, transitory) value. Copying of the table, in particular, would not provide the malevolent actor with information that could be used elsewhere effectively. Here, a variety of forms of format preserving encryption - in particular, both DyDE and FPE - would be effective. However, for other use cases discussed further below, DyDE approaches to creation of an "encrypted PAN" are generally described.

Such a solution is illustrated in Figure 15. Transaction data with a token (Token 1), in the form of an FPE encrypted PAN -- E(PAN) -- and a transaction cryptogram based on this token, arrives at the MDES 151 for verification. This is passed to the HSM 152 for transaction cryptogram verification relative to Token1 = E(PAN). If the cryptogram verification passes successfully (OK is returned), MDES 151 calls (through the getDecryptedPAN API) the detokenization table AMS 153 with Token 1 as input. After appropriate processing by AMS, the MDES 151 gets back the plaintext PAN, for composing the conventional EMV 0100 message for authorization of funds with the issuer. This result, containing the PAN in cleartext, is visible from the AMS 153, and as such, would be accessible to an external observer. However, a malicious third party would need to mount an active eavesdropping attack that probes the communication channel to find this information. The important gain is that the PAN is represented -- while stored, at rest -- in the AMS 153 only as the E(PAN) following a DyDE operation, and as such it is not available for an operator to view in clear form. This provides an important benefit for PAN confidentiality and privacy protection for the cardholder.

This approach will preserve privacy in the AMS 153 at the cost of a small additional execution time. As noted below, however, this approach only addresses certain types of security concern and does not address a fundamental issue of centralization leading to excessively large decentralization tables. This problem with centralization can be addressed to some degree by having multiple MDES sites with associated token vaults, with routing of transactions to designated sites for specific payment cards or card products. This however results in considerable additional messaging - so creating new bottlenecks - as well as the need to ensure that the system as a whole is synchronized. Use of a device or server level E(PAN) can simplify the decentralization of detokenization tables in a number of different ways - these may for example be stored in a consumer device (suitable for contactless and in-app remote transactions) or securely in an internet server for e-commerce. Embodiments of the disclosure relate to the use of an encrypted PAN, or encrypted token, type approach as described above.

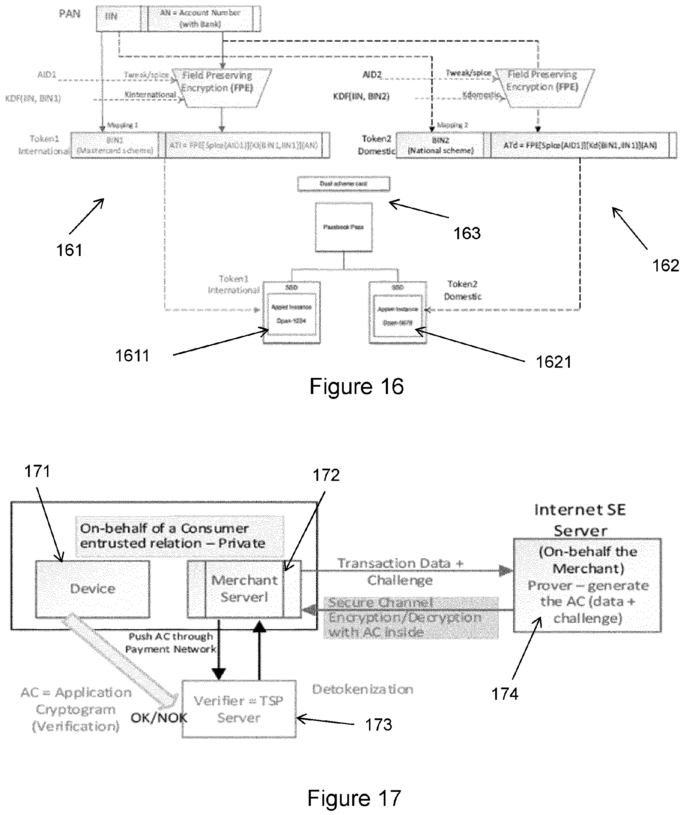

Using this approach, a token may be used with the same structure as existing tokens - standardised according to ISO/IEC 7812 -while having the same switching effect as a PAN. This can be done, for example, by preserving fields from the PAN that relate to routing, or to identification of institutional or product information, and encrypting the rest (such as, in particular, any specifically account number related element). It is also possible to use different encryption approaches on the same data - different keys, or different tweaks - to use for different routes to provide different encrypted tokens. With this approach, it is straightforward to produce multiple tokens for one PAN for different situations - for example, to have a different token for a domestic or an international transaction - so that these can be processed differently. Figure 16 indicates how this can be done for two different situations using the same PAN - a first route 161 is used for an international transaction (with proprietary processing) - in this case an international key is used and a tweak derived from a first AID is used when operating on the PAN, giving an international token 1611. The second route 162 is used for a domestic transaction with domestically mandated processing - this uses a domestic key and a tweak derived from a second AID, giving a domestic token 1621. The international token 1611 and the domestic token 1621 have the same overall format, but are different. These will be routed into the transaction system by different transaction types, and so will see different processing by the international or domestic transaction processor. In this way, a dual scheme card 163 can be produced that will provide different tokens for international and national use.

The first elevated level of security shown in Figure 14 in this case combines the use of a DyDE pre-computed token and conventional EMV transaction processing (using an application cryptogram) to provide an effective solution for Secure Card-on-File (SCOF) transactions. For a secure card-on-file transaction, the merchant recognizes a consumer request as being authentic and consenting to a Card Not Present (CNP) transaction, and then triggers an e-commerce transaction on the consumer's behalf having the consumer's card details on file. Use of a pre-computed token modifies an existing SCOF process as follows:

- The merchant holds consumer tokens in its "card-on-file" register, and the token is included in the transaction authorisation request. The transaction request is handled as today except that the nature of the token is different - it is now a DyDE cryptogram of the PAN, rather than an arbitrarily selected value.
- The merchant asks its TSP, acting as an Internet SE (Secure Element) Server, to prepare an application cryptogram (AC). Again, this is as current SCOF.

This arrangement is shown in Figure 17. In this arrangement the merchant, and not the consumer, proves the authenticity of the transaction (on behalf of the consumer) and the TSP server verifies the authenticated payment transaction. Specifically, the user device 171 interaction with the TSP server 173 is limited, the main interaction of the TSP server 173 being with the merchant server 172. The merchant server 172 provides the transaction data and the challenge to the Internet SE server 174, which provides the AC, subsequently provided to the TSP server 173 for verification. Note that the Internet SE (Secure Element) server 174 performs a similar role to a Secure Element (SE) in a user device - implemented as a server, it has access to secret keying material (typically using an HSM) to perform cryptogram computations for a community of users. The practical effect of this overall arrangement is as if the consumer's device 171 is authenticating the payment transaction to the TSP server 173. As shown, all interactions between partners are performed over secure server-to-server channels - provision of such channels is standard practice for the person skilled in the art and is not discussed further here. (It is noted that these security measures support a liability shift to the merchant, as the issuer's involvement is clearly secure). Consequently, the TSP's AC generation is performed through its Internet SE Server, which interacts over a Internet channel secured by encryption with its associated merchant server, thus securing a trusted relationship between them; and verification of the AC is performed by the TSP server, represents the online payment data authentication, and enables payment to be made to the merchant.

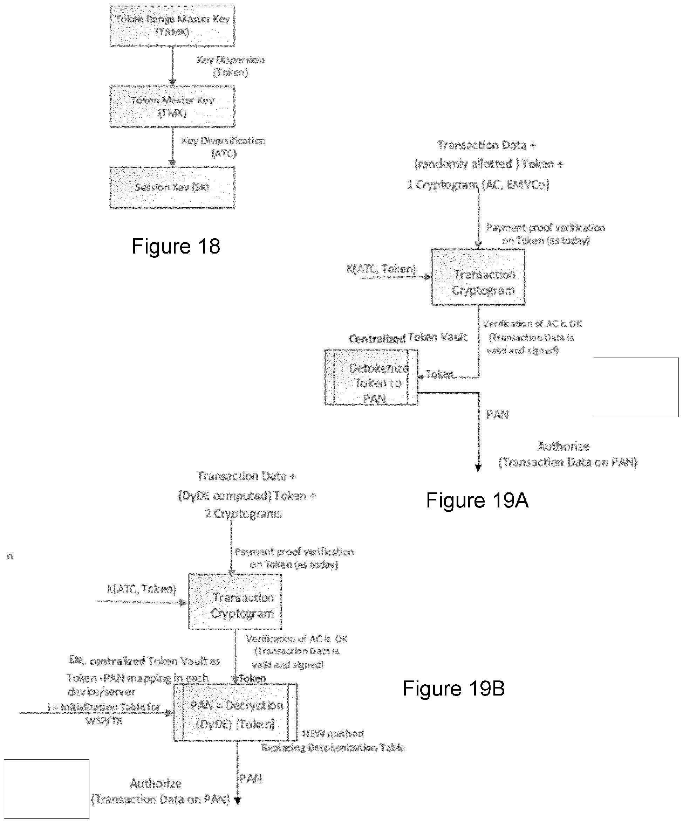

Derivation of a session key for this arrangement is shown in Figure 18. The TSP performs key dispersion of the Token Range Master Key (TRMK, stored in its HSM) through the token value, which is corresponding to the *Token's BIN,* to get the appropriate Token Master Key (TMK) used for the token's payment proofs. To obtain the Session Key (SK) needed for the AC computation for this transaction, a key diversification of TMK is performed using the Application Transaction Counter (ATC) kept by the TSP's Internet SE Server, in its operational database, for this token.

Using this session key SK, the TSP's HSM computes the AC in a standard EMVCo manner - this will include a fresh challenge from the merchant's payment server. The TSP will provide the AC in an appropriate format of transaction data and send it back to the merchant's payment server, which will consequently provide it to the TSP verification process - conventionally, this is as illustrated in Figure 19A. In this context, the most relevant aspect of this existing processing to note is that detokenization is still performed with a centralized detokenization table. The new approach involves detokenization by calculation - using the initialisation table I as indicated above - rather than reference to a token vault, and the process uses two cryptograms rather than one as in the conventional approach: both approaches use the AC, but in the new approach the token itself is a cryptogram. There is no practical difference in approach until the AC is verified, but after this the new method of Figure 19B involves decryption of the token into a PAN by using the DyDE algorithm using the following steps:

- Provide the token as input.
- Retrieve the initialisation table I - used as a matrix key stored in the TSP's HSM - corresponding to the BIN of the wallet service provider; and
- Obtain PAN by decryption of the token field using I in digit-by-digit mode.

This consequently provides another example of use of a token generated according to an embodiment of the disclosure, in this case such that the encryption ensures that only the parties that need the ability to know the PAN can recover the PAN.

At the security levels indicated above, format preserving encryption is used for preserving the privacy of the PAN, but there is no change in the nature of payment proof - this is essentially a conventional AC. Mobile transactions can be a challenging environment for security, and it is generally desirable to investigate ways in which to make such payments more secure. Format preserving encryption techniques as described above can contribute to this by providing new types of payment proof.

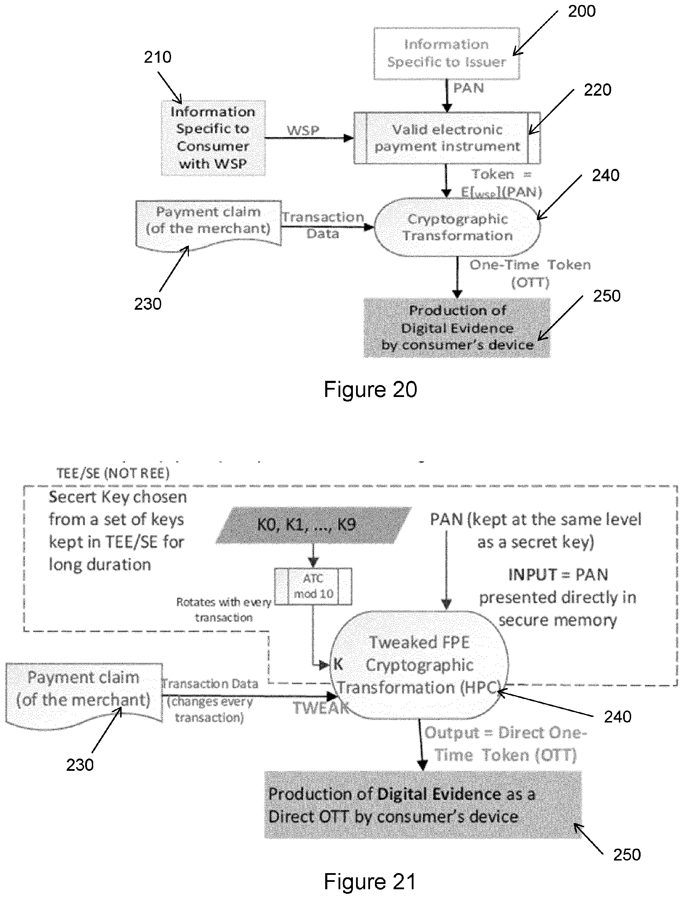

A second elevated level of security for tokenisation may involve not only use of an E(PAN), but also a new type of payment proof, in an approach particularly appropriate for use in a mobile environment. A particular aspect to address in mobile usage is that of remote in-app transactions (generally known as DSRP) - these involve mobile payments made over a wireless Internet connection (other issues with mobile payments also create issues and will be discussed further below). For such an environment, a different approach to payment proof can be taken, as shown in Figure 20, which indicates different kinds of proof or evidence that can be provided at the payment device. The payment instrument is established with a PAN for the user account (from information specific to the issuer 200) and information specific to the consumer and their wallet service provider 210 - these are used to create an E(PAN) token for the combination, which is itself the basis for a valid electronic payment instrument 220. This can then be used - with appropriate cryptographic transformation 240 - with the transaction data forming the payment claim of the merchant 230 to provide digital evidence 250 of the transaction and the payment device's (and their user's) participation. While such evidence is typically provided by EMVCo through an AC, this approach shows that such evidence may also be provided by creation of a one-time token (OTT). Such tokens may be produced securely, but also very rapidly.

Creation and use of such an OTT in different situations will now be described. First of all, two approaches to OTT generation will be described: "direct" and "indirect" OTT.

Direct OTT applies when the starting point is a PAN held at the security level of a key. While not a standard arrangement, there are some payment devices where the PAN is fully integrated in this manner - it is held in a secure operating environment (a secure element SE or a Trusted Execution Environment TEE) and is not accessible from the main Rich Execution Environment (REE) or in any publicly readable records. Here, the PAN can be used directly as input to a format preserving encryption process 240 to generate a one-time token (OTT) as a payment proof 250 - this is illustrated here in Figure 21. This may be, for example, by the Hasty Pudding Cipher (HPC) as discussed above. The key for generation of the token may be one secret key, but in one arrangement (essentially similar to that described in the applicant's earlier European Patent No. 3748525 entitled "Credential Management in Distributed Computing System", the contents of which are incorporated by reference to the extent permitted by applicable law) it may be one of a list of keys selected according to the application transaction counter (ATC) value. The payment claim from the merchant - which will of course vary every time - can be used as the tweak 230. The output will therefore be a OTT of the same format as the PAN which can be used in itself as digital evidence 250 of the transaction. This can be produced extremely rapidly, but it is limited in application - for example, it will not be effective for use in REE-based applets.

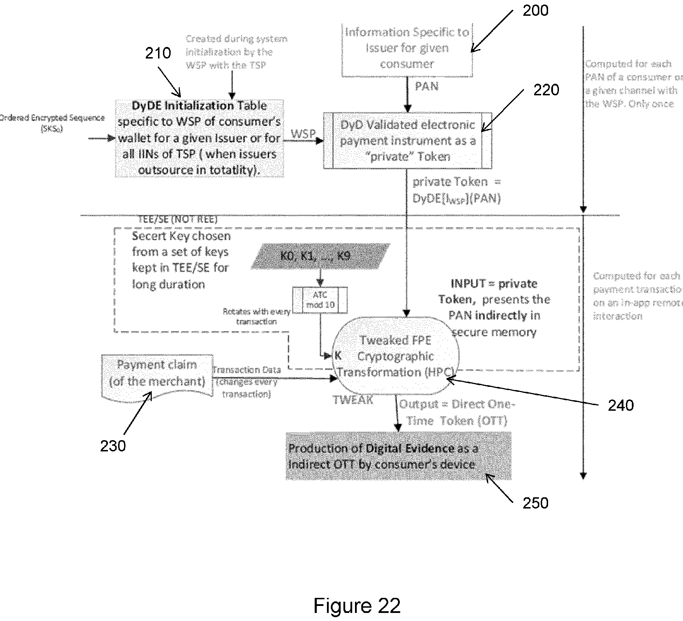

Where the PAN is not secret, then the "indirect" OTT approach can be used - this is illustrated in Figure 22. Applications running in the REE can make calls to an SE or TEE to conduct cryptographic operations on their behalf. Here, using the approach described above for E(PAN) generation, the PAN is provided as input 200 to a DyDE process using an WSP-specific DyDE initialization table 210 to generate a private token 220 $DyDE[I_{WSP}](PAN)$, which is held securely. This is a further example of generation of a token according to an embodiment of the disclosure for a determined purpose.

In embodiments of the disclosure use of such a private token enables a piece of information that may not be treatable as secure because of its use in other transaction contexts - the PAN - be reconfigured as a piece of information secure in a consumer computing device (and constructable within a transaction system), and used only in secure or otherwise inaccessible environments. As previously stated, this is achieved through using initialisation information, typically derived from the wallet service provider. A preferred approach to generating such a private token is as described above - using format preserving encryption with the wallet server provider derived information provided as a tweak. It is particularly convenient for this to be achieved through generation of an initialisation table as a basis for digit-by-digit encryption, as discussed above. Such a table may be generated for a WSP for a specific issuer, or for a particular set of IINs, for example. While this issuer-related information need not itself be secret, in this context it can be used to generate private tokens that can be treated as secure, because they are held only in the secure part of the cardholder's payment device. Decryption to establish necessary information for authorisation is possible only within the relevant part of the transaction system.

Instead of provisioning a token to the consumer payment device from the transaction system, as is done conventionally, encryption of the PAN and provisioning to the user device can be carried out by the WSP, which is best positioned to hold the DyDE initialisation table. The consumer's most fundamental relationship in relation to security of transactions carried out on their device will typically be with their wallet service provider, so this is a practical way for the trust relationships to be developed. The key for creation of the initialisation table may be held at the TSP of the transaction system.

When a payment proof is required for an in-app transaction, a call is made to the SE or TEE to perform a HPC cryptographic transformation 240, as for the Direct OTT case. Here the input is the token with the key provided as in the Direct OTT case - both these elements are secret - this is again a private token obtained by digit-by-digit (DyDE) encryption of a PAN, and kept private to the secure processing environment of the cardholder device. The payment claim of the merchant is used as before as the tweak 230. The output is again a OTT which can be used as digital evidence 250 of the transaction from the mobile device.

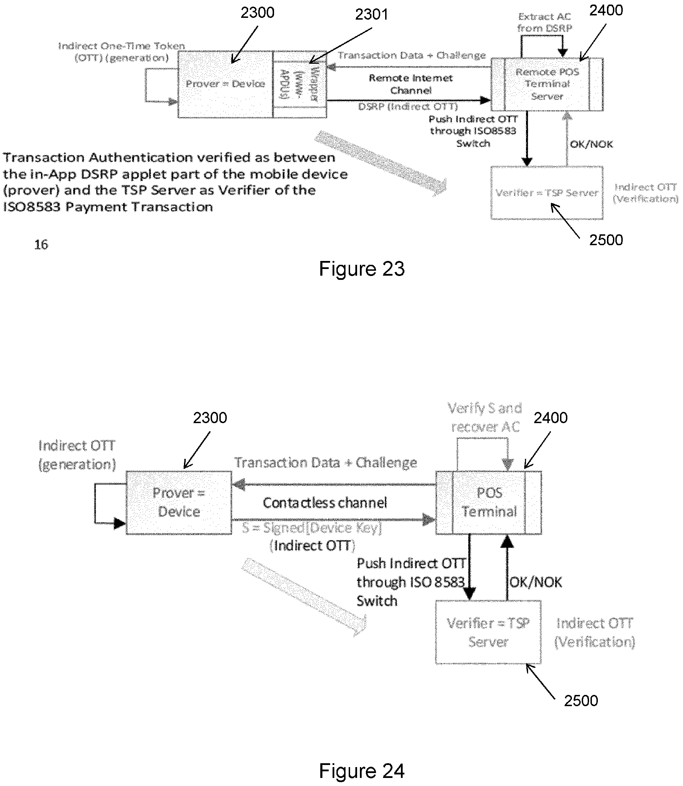

The way in which such an OTT is used to substantiate payment is indicated in Figure 23, shown for an Indirect OTT. The remote POS terminal server 2400 provides the transaction data (and an appropriate challenge) to the payment device 2300, which generates and returns the OTT as a payment proof as part of the DSRP response. The OTT is provided by the remote terminal server 2400 to the TSP server 2500, which has access to the DyDE initialization table and all information required to verify the OTT. On confirmation that the OTT is verified, the remote POS terminal server 2400 is able to construct an AC from the DSRP information, and the transaction can be provided for authorisation in a conventional manner. This approach is in some way similar to SCOF, but instead of the merchant acting for the customer simply on the basis of a trust relationship, here there is an authentication of the transaction between the mobile device (specifically the in-app DSRP applet 2301 as "prover") and the TSP server (as "verifier") and the payment transaction can subsequently follow an ISO 8583 flow.

A further level of security can be provided where the mobile device is used for contactless (NFC-based) transactions. These transactions provide some additional complexity over DSRP transactions - this is limited if the transaction is online-only and no Offline Data Authentication (ODA) is required - ODA requires a more complex solution, but can be addressed by use of a particular token type. This highest level of security for tokenisation is then further described in the context of a payment app suitable for Apple and Google payment wallets.

An online-only tokenized payment transaction needs to follow a particular transaction flow - it must be always switched to MDES at the time of transaction, processed therein, and a response must be successfully returned by MDES to the contactless POS Terminal. If any of these steps is not completed successfully, the contactless POS declines the payment transaction. An approach to online-only contactless payment transactions in line with embodiments of the disclosure is provided with reference to Figure 24. This is broadly similar to the DSRP approach (referred to in Figure 23), since a challenge-response mechanism can be used between the contactless POS and Mobile App, with the later generating a transaction cryptogram (referred to as Application Cryptogram, AC, in EMVCo standards) computed as an Indirect OTT. The response of the mobile app includes ONLY the Indirect OTT - for such an online-only transaction, there is no need for this to be wrapped in an offline data authentication (ODA) mechanism such as a CDA (combined DDA with application cryptogram computation - in which a dynamic signature and application cryptogram are generated together). This type of interaction described here is secure enough when restricted to online-only transactions, as specified above. Here the response to the POS terminal 2400 is not signed. In this case an Indirect OTT, which is the transaction cryptogram, is produced using the device's mobile app's secret key at the device 2300. POS Terminal 2400 simply pushes the Indirect OTT in the authorization message prepared by the contactless POS, to the TSP server 2500, which can verify the Indirect OTT as before.

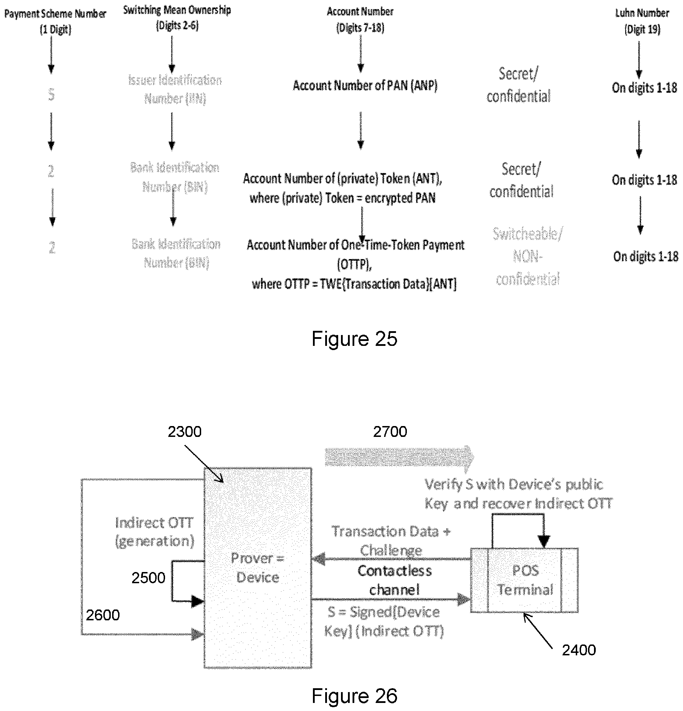

To ensure that the token - the encrypted PAN - is still effective for routing, it is generated as a private token using a digit-by-digit format preserving encryption approach with certain digits reserved. This is a particular example of generation of a token constructed to achieve effective routing by preserving some, and encrypting other, places in the data field. This approach is shown in Figure 25, indicating how digits in the 19-digit card number vary depending on the use model. The top line indicates a conventional payment card - it has a first digit identifying a payment scheme (for example, "5" for Mastercard), digits 2-6 indicate an Issuer Identification Number (IIN), which ensures that the transaction is routed correctly for authorisation to the appropriate issuer, then digits 7-18 set out out the account number to be linked with the PAN (ANP), and the final digit (digit 19) is a Luhn check digit. The second line indicates a digital payment card - the first digit is "2" indicating a digital card, and the routing digits 2-6 now reference a Bank Identification Number (BIN). The BIN typically represents a digital product corresponding to an IIN. The account number is now becoming the account number of the token (ANT), which in the cases described above, represents an encrypted PAN. This is generated using format preserving encryption, and the tweak - which is not secret and can be changed regularly - is provided as an input along with a secret key (changed far less frequently). Using this approach, as described above, a private token is generated. This private token may reflect specific processing requirements - for example, these may lead to differences in the tweak value resulting in different private tokens for different processing routes.

For processing of a transaction under a protocol which allows for it to be authorized offline by the contactless POS terminal, without online intervention of MDES, a further step is taken - this is because such a protocol requires offline data authentication (ODA). An overview of such an arrangement is shown in Figure 26. The private token remains secret - it stays within an SE or a TEE of the mobile device - and is used by the Mobile App to produce 2500 the OTT for the payment (OTTP) within device 2300 (prover). The OTTP is computed using a tweaked encryption algorithm with a finite domain for FPE input/output. It takes the private token as input and the transaction data as the tweak to generate OTTP. The OTTP is then returned in the Generate AC signed response (as required under the relevant EMVCo protocol) to the contactless POS. The later, after verifying the correctness of the device's/mobile app signature, includes the authenticated OTTP into the Application Cryptogram sub-field of the DE55 field, to be send by way of the acquirer to MDES. As this OTTP is a one-time value, it can be provided in the Authorization Request to MDES 2400 without encryption. The OTTP is then used by MDES 2400 in a Digital Transaction Processing's cryptogram verification phase of the payment transaction for authorisation.

However, this OTTP approach -- using an Indirect OTT as a payment proof in place of a conventional Application Cryptogram -- cannot be adopted directly when ODA is required for "sometimes offline" transactions. This is because ODA - represented 2600 in Figure 26 as a second processing level of the device 2300 (prover) -- is a digital signature made on behalf of the token on a set of transaction data, whose verification needs to be matched against a public-key certificate provided in respect of the routing token. As the Indirect OTT for payment (OTTP) varies from transaction to transaction, it cannot be used as such a routing token. Correspondingly, it is not useful to produce a public-key certificate linked to the OTTP, or to include it in the permanent application records of mobile's app. To address this issue, another mechanism is needed - here, the digital app's certificate in the publicly readable records indicated by digital app's FCI is instead produced on the device's Channel Token. The general idea of a Channel Token defined by parameters of the transaction channel for the consumer is introduced in the applicant's copending European Patent Application No. 24185536.0 entitled "Credential Management and Use in a Distributed System" and filed on 28 June 2024, the contents of which are incorporated herein to the extent permitted by applicable law. Using this arrangement, a signature 2700 produced with respect to the (private key, public key) of the digital app is provided with respect to its channel token - the OTT is included as an authenticated/signed value (as for the Application Cryptogram in the EMVCo approach). Using this approach, authorization can be carried out directly by the contactless POS with no involvement from the MDES, as opposed to the arrangement of Figure 24, where the authorization of the transaction cannot happen without MDES.

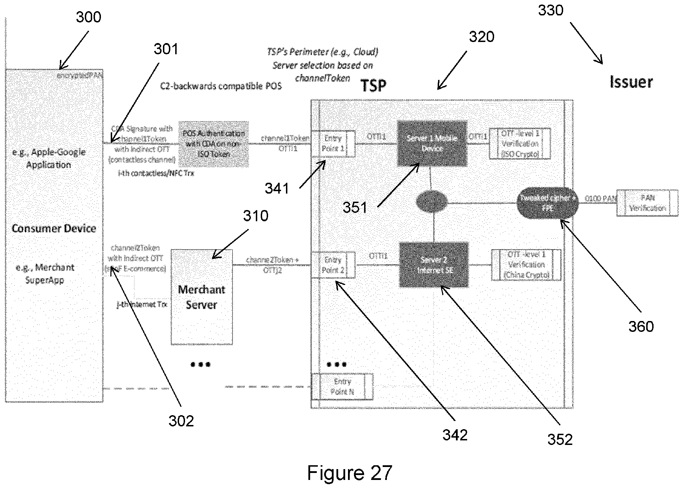

This superior solution -- outlined in Figure 26, and briefly explained in the above paragraphs -- is well adapted for use with Apple and Google wallets. It employs a different type of token functionality, generally referred to here as a non-ISO8583 Token. This functionality is detailed as illustrated in Figures 27 to 30. The non-ISO8583 token varies in certain respects from the ISO 8583 functionality since it is a tuple of information items, instead of a single item. This tuple consists of a channel token and a PAR. The channel token comprises/encodes certain characterising features of the channel (distinct from account-related information) used between the mobile app and the POS, and which is used for routing digital payment transactions until reaching the MDES/TSP's frontier (Entry Point 1, Entry Point 2, ... Entry Point N, with reference to Figure 27). The Payment Account Reference (PAR) of the digital card's original PAN, is used for linking it financially to the consumer's source of funds. This type of token is introduced in the applicant's earlier co-pending European Patent Application No. 24185536.0 entitled "Credential Management and Use in a Distributed System" and filed on 28th June 2024, the contents of which are incorporated by reference herein to the extent permitted by applicable law. It is hereafter referred to as a "channel token" for reasons discussed below. The general approach is shown in Figure 27. The user device (represented here by the enhanced wallet application 300) is able to provide different channel tokens (linked to same PAN-PAR pair) for different processing channels - here, there is shown a first token 301 for the contactless channel, which is provided for POS payment authentication in a response with a CDA Signature with channel1Token with Indirect OTT; and a second token 302 for SCOF e-commerce (channel2Token with Indirect OTT, but without CDA), which is provided to an merchant server 310. These channels reach different entry points 341, 342 in the TSP 320's perimeter, and follow different initial processing paths. The first token transaction reaches the mobile device processing 351 path of the TSP, and OTT verification takes place using the appropriate cryptographic mechanism (here, this is standard ISO Crypto). The second token transaction reaches the internet SE 352 part of the TSP, and again OTT verification takes place using the appropriate cryptographic mechanism (in this example, this is a different mechanism - the Chinese national cryptographic suite). The processing routes converge for detokenization using format preserving encryption 360 with the relevant tweak and key to recover the PAN and enable PAN verification 370 by or on behalf of the issuer 330, and so provide the authorisation of the transaction (by the standard ISO8583-EMV route). It should be noted that in this structure, the PAN of the payment device is kept securely and is not publicly obtainable information.

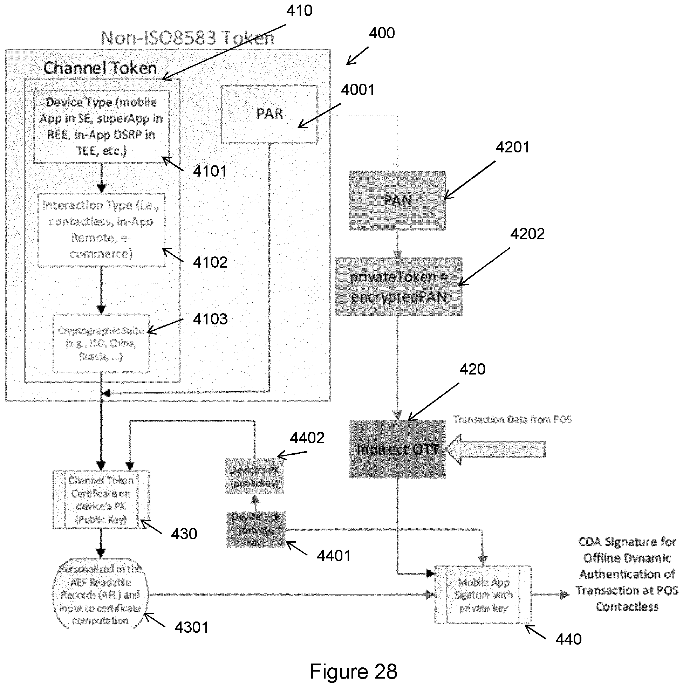

The structure of such a payment token 400 including a channel token 410 is shown in Figure 28, which also illustrates how the channel token 410 is used together with the OTT 420 as payment proof. The elements of the payment token 400 are information relating to the performance of the transaction, comprised in the channel token 410 - the device type 4101, the interaction type 4102, and the cryptographic suite used 4103 - and the PAR (Payment Account Reference) 4001, which is a reference value associated with a PAN. These can be used to create a certificate on the device's public key, and the information in it personalised in the AEF Readable Records (AFL). Unlike the OTT, these elements do not vary from transaction to transaction, so can be formed into a certificate 430 for CDA purposes and suitably recorded 4301. There will however be multiple certificates provided for different transaction types (and possibly for different cryptographic suites for particular transaction types, which may for example be determined by transaction geography). Separately, the OTT is developed as payment proof from the private token 4202 (and so indirectly from the PAN 4201) as indicated above. The OTT 420 is provided as payment proof with the channel token certificate information 4301 to produce the signed record 440 using the device private key 4401 (the device public key 4402 will be provided with certificate information). The output is a CDA Signature for Offline Dynamic Authentication of a transaction using POS Contactless - in other words, the use of a channel token 410 in this way enables the mechanism shown in Figure 26 to work.

The elements of an exemplary channel token will now be described in more detail. The device type attribute 4101 (mobile App in SE, superApp in REE, in-App DSRP in TEE, etc.) classifies consumer devices from a security strength perspective, considering factors such as how a token is stored. The interaction type attribute 4102 (e.g. contactless, in-App Remote, e-commerce) and the crypto suite type attribute 4103 (AES 128, SM4 in China, GHOST 128 in Russia) determines the applications used and how they are treated. This approach is extremely flexible - it accommodates format preserving encryption methods as described above, and can also be used with new encryption solutions as they are developed.

While a single key could be used, in described embodiments keys for production of Indirect OTT are provided by key set per wallet provider and tokenChannel features, and stored as the same set of keys into all consumers' device secure enclaves of the same type. Within this method, through a round robin selection mechanism based on ATC, the key can be determined from a predetermined set of keys, rather than simply a unique master key per device used to provide session keys per transaction (as for conventional EMV).

Both components of the non-ISO8583 Token (the payment token) - PAR and channelToken -- are personalized in the publicly readable records for the enhanced wallet application. These records are marked up in the Application File Locator (AFL) for the public key certificate verification in the CDA used with a Contactless POS. These components create neither confidentiality issues nor privacy concerns for the consumer, and therefore they can be included in "clear" in the personalized record (as shown in following table, where the enhanced wallet application is referred to as AGA (for Apple Google Application).

Table 2 - AFL data fields for Channel Token

| Data Object Name | Tag | Length | Value |
|---|---|---|---|
| Application PAN | '5A' | 8 | (Specific meaning) Value of the non-ISO 8583 Token part corresponding to the Channel Token associated with the Mobile App and its processing on the TSP server. |
| PAR | '9F24' | 29 | (Specific meaning) Determined by TSP (as of today for any PAN). Value of the non-ISO 8583 PAR part associated to the PAN, to which Mobile App in the device is financially linked. |
| PAN Sequence Number (PSN) | '5F34' | 1 | (Specific meaning) Version number of the corresponding channel token that brings a tokenized transaction to a given processing point of the TSP. |
| Application Expiration Date | '5F24' | 3 | (Specific meaning) Determined by TSP according to franchise requirements for channel assessments. Date after which the channel token is no more allowed to bring digitized transactions to the TSP concerned server. The date is expressed in the YYMMDD format. |

(continued)

| Data Object Name | Tag | Length | Value |
|---|---|---|---|
| Application Effective Date | '5F25' | 3 | (Specific meaning) Determined by TSP according to franchise requirements for channel assessments. Date before which the channel token is not yet allowed to bring digitized transactions to the TSP concerned server. The date is expressed in the YYMMDD format. |
| Application Version Number | '9F08' | 2 | (Specific meaning) Version of the Mobile App software applet, independent of the version number of the channel token. It designates the level of cryptography that it can treat: <br> - 0001 -- NO Token at all, but just encrypted PAN in Issuer Application Data (IAD). <br> - 0002 -- Private Token = Field Preserving Encryption of a PAN, in a static manner. Referred to as encryptedPAN is kept in secure enclave of AGA. <br> - 0003 -- ISO 8583 One-Time Token Payment (OTTP), corresponding to the encrypted PAN in a dynamic manner, depending on: <br> a) Merchant's operational parameters, and <br> b) Transaction ticket. |
| Application Currency Code | '9F42' | 2 | (Specific meaning) Determined by TSP. Indicates the currency in which the account is managed in accordance with [ISO 4217], when TSP is approached by that specific channel Token targeting PAN's PAR. |
| Issuer Country Code | '5F28' | 2 | (Specific meaning) Indicates the country of the TSP's processing point that must receive and treat the channel token based digitized transaction, brought through the channel token. This allows considering the legal and operational peculiarities (nationalism features, e.g., in cryptographic algorithms) of that country. In accordance with [ISO 3166]. |
| SDA Tag List | '9F4A' | 01 | '82' |
| CVM List | '8E' | 14 | '00000000 00000000 xxxx yyyy zzzz' |
| CA Public Key Index | '8F' | 1 | Determined by TSP -- with the meaning of index to TSP Signing Public Key used for Channel Token PK/AGA PK certification. |
| Issuer Public Key Exponent | '9F32' | 1 or 3 | Determined by TSP - with the meaning of Channel Token PK exponent |
| Issuer Public Key Remainder | '92' | var | Determined by TSP- with the meaning of Channel Token PK modulus reminder |
| Issuer Public Key Certificate | '90' | var | Determined by TSP- with the meaning of Channel Token Certificate |
| ICC Public Key Exponent | '9F47' | 1 or 3 | Determined by TSP - with the meaning of AGA PK exponent |
| ICC Public Key Remainder | '9F48' | var | Determined by TSP- with the meaning of AGA PK modulus reminder |
| ICC Public Key Certificate | '9F46' | var | Determined by TSP- with the meaning of AGA PK Certificate |

This non-ISO 8583 Channel Token in Consumer's device is included in CDA with Contactless POS, as described above. This is done in a backwards compatible manner by using a "Channel" PK Certificate instead of an "Issuer" public key (PK) certificate. Consequently, when referring to a mobile app's "ICC PK Certificate", this is linked not only to a token, encoded in its Application PAN field, but also to a TSP accepted channel to its server. By contrast, in conventional EMV reference is to "Issuer Public Key Data to be Signed by Certification Authority" (Table 10, EMVCo Book 2), as input to the Issuer Public Key Certificate, to prove that the key is that of the Issuer that owns the relevant 3-8 digits PAN/Token range, i.e., IIN (for PANs) or BIN (for Tokens), 21. Instead, in this method the certificate is testifying a TSP's control of a Channel Token from a technology soundness perspective, through "Public Key Data for Token Channel signed by the TSP". In fact, we have now a Channel Token Certificate from a logical perspective, but which continues to be seen as an Issuer Public Key Certificate by an (EMV) C2 kernel Terminal, for compatibility reasons. The consequent Channel Token certificate is as below:

Table 3 - Channel Token Certificate Fields

| Field | Length | Name | Description Format |
|---|---|---|---|
| Certificate Format | 1 | Hex value '02' - stays as for Issuer PK certificate for kernel C2 compatibility reasons. But from a logical perspective this is a Channel Token Certificate. | b |
| Channel Identifier (Instead of Issuer Identifier) | 4 | Leftmost 3-8 digits of the Cannel Token's ISO8583 representation (padded to the right with Hex 'F's) | cn8 |
| Certificate Expiration Date | 2 | MMYY after which this Channel Token Certificate is invalid - security reassessment of the channels' technology is performed periodically. | n4 |
| Certificate Serial Number | 3 | Binary number unique to this Channel Token Certificate assigned by TSP | b |
| o Hash Algorithm Indicator, o Issuer Public Key Algorithm Indicator, o Issuer Public Key Length, o Issuer Public Key Exponent Length, o Issuer Public Key or Leftmost Digits of the Issuer Public Key, o Issuer Public Key Remainder, o Issuer Public Key Exponent | Except Field and Name that have the "Channel" prefixing meaning wherever the "Issuer" prefixing word appears, Length and Description Format keep unchanged their meaning and syntax. | | |

This is provided in such a manner that there is backward compatibility with existing EMV arrangements. EMV requires "ICC Public Key Data to be Signed by Issuer" (Table 11, EMVCo Book 2), as input to the ICC Public Key Certificate production, which proves that ICC public key is of a mobile app's with the Application PAN that belongs to a consumer that is a customer of the issuer in the Issuer PK certificate, As noted, a terminal using EMV with kernel C2 will continue to see this certificate as an ICC Public Key Certificate, for acceptance compatibility reasons, with the following fields:

Table 4 - ICC Public Key Certificate Fields

| Field | Length | Name | Description Format |
|---|---|---|---|
| Certificate Format | 1 | Hex value '04' - stays as for ICC PK Certificate for kernel C2 compatibility reasons. | b |

(continued)

| Field | Length | Name | Description Format |
|---|---|---|---|
| Application PAN | 10 | ISO8583 channelToken (padded to the right with Hex 'F's) for switching to the appropriate Entry Point of the TSP, which together with the PAR present in the Static Data to be Authenticated individualize the non-ISO8583 Token for the current device/Mobile App. | cn8 |
| Certificate Expiration Date | 2 | MMYY after which this Certificate is invalid - security reassessment of the channels' technology is performed periodically. | n4 |
| Certificate Serial Number | 3 | Binary number unique to this Mobile app in device certificate assigned by TSP | b |
| o Hash Algorithm Indicator, o ICC Public Key Algorithm Indicator, o ICC Public Key Length, o ICC Public Key Exponent Length, o ICC Public Key or Leftmost Digits of the ICC Public Key, o ICC Public Key Remainder, o ICC Public Key Exponent | Except Field and Name that have the "Channel" prefixing meaning wherever the "Issuer" prefixing word appears, Length and Description Format keep unchanged their meaning and syntax. | | |

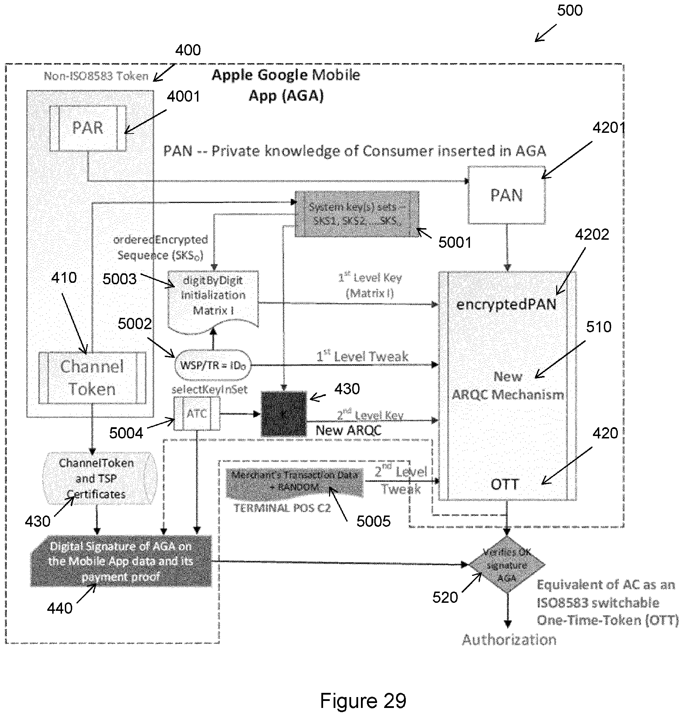

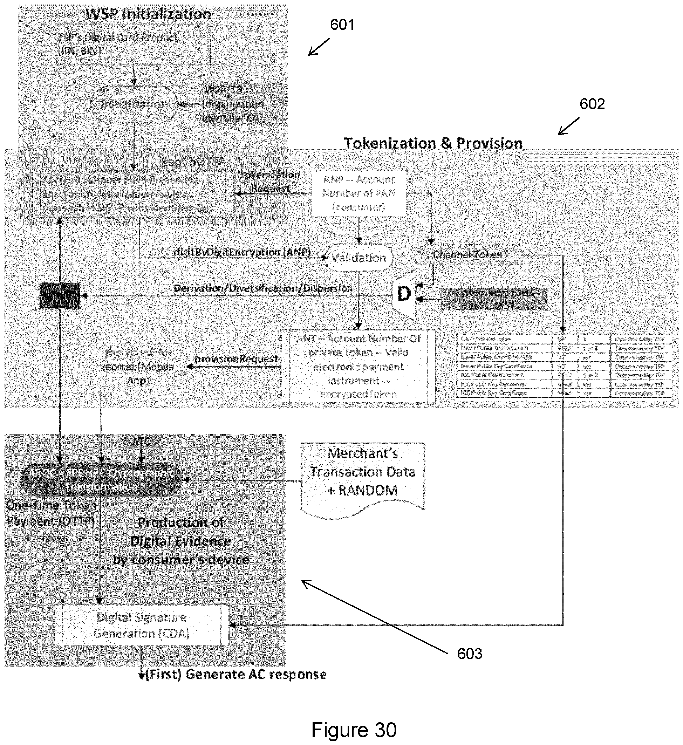

The enhanced wallet application used here will now be described in more detail with reference to Figures 29 and 30. Figure 29 shows the cryptographic engine of the enhanced wallet application (AGA) 500, which integrates various of the functionality discussed above. The PAN 4201 is here treated as private to the consumer/cardholder, and is loaded into the AGA securely. The non-ISO 8583 payment token 400 comprising PAR 4001 and Channel Token 410 elements comprises information which does not need to be kept secret, and can therefore be used for Channel Token and TSP certificates 430, and hence for the digital signature 440 of the AGA on mobile app data and the payment proof. The AGA is provided with a system key set 5001. WSP/TR characterisation 5002 is used with the key set 5001 to establish a DyDE encryption matrix 5003 I and this is used with the PAN 4201 to establish an encrypted PAN 4202. The WSP/TR characterisation 5002 is used as a first level tweak on the encrypted PAN value 4202. For generation of a payment proof 420, the tweaked encrypted PAN is provided as input to a further FPE mechanism with key K - here the application transaction counter 5004 ATC is used to select a key K from the key set 5001 - with transaction data from the merchant 5005 (specifically from the POS terminal, using an EMV C2 kernel) provided as the tweak, with an OTT 420 generated as the result. This OTT 420 is the payment proof - when the signature has been verified 520, this can be used as an ISO 8583 switchable token adapted to provide the correct routing to the transaction when submitted for authorisation.

This approach requires a new ARQC mechanism - ARQC in EMV is the type of Application Cryptogram provided when a transaction is to be routed for authorization by the issuer. A suitable mechanism is described with reference to Figure 30. The mechanism shown can be deployed in the Rich Execution Environment (REE) of a mobile device. The AGA performs secure operations using keys and cryptographic algorithms in the secure enclave of the mobile device. This may be implemented in a variety of ways (for example, using an SE or a TEE), but from the perspective of the application is effectively provided as "Security-as-a-Service" (SaaS) operating within the mobile OS platform, and called by the AGA mobile payment application when required.

As shown in Figure 30, WSP initialization 601 is required as a first step. Each Wallet Service Provider (WSP)/Token Requestor (TR) consequently needs to go through a registration and initialization process to use this technology. During this process, the TSP creates for each WSP/TR a set of keys that will be used to create the Account Number Field Preserving Encryption Tables. After this, tokenization 602 can occur. These tables are now used, using the mechanism described above, for the generation of an Account Number of a (private) Token, described above as an encryptedPAN, when given the Account Number of a PAN in clear. Tables are set in the TSP server's secure memory, and act as a product range/wallet provider digit-by-digit encryption key. The Channel Token has an associated set of certificate information, which can be held/provided as ICC certificate information.

Using this approach, the PAN is encrypted for a particular type of device (or server) with their specific storage space and its security level for the PAN's corresponding PAR, as is described above in respect of the Channel Token. This Channel Token is/can be simultaneously used for:

Switching,
Public key certification (for face-to-face interaction in contactless), and
Key Sets generation/distribution operations.

When a transaction needs to be authorized 603, the encryptedPAN exists and a key K can be selected based on the ATC value. These are provided to a format preserving encryption - here HPC - cryptographic transformation: the encryptedPAN as input, the key K as key, and the merchant-provided transaction data (and any associated random value) as tweak. The output is the OTT, which can be provided along with the Channel Token ICC certificate information for the mobile device to generate a CDA digital signature over the data to be provided back to the terminal as a (First) Generate AC response in accordance with EMV protocols.

As the skilled person will appreciate, embodiments of the disclosure may be provided differing materially from those set out above.

## Claims

1. A computer-implemented method of tokenisation comprising:

   providing a first value for a data field determined in accordance with a set of data field rules;
   encrypting some or all places in the data field of the first value using format preserving encryption to provide an encrypted first token also complying with the set of data field rules; and
   using the encrypted first token in place of the first value in one or more operations associated with the data field.

2. The computer-implemented method of claim 1, comprising providing a set of first values and encrypting the set of first values to provide a set of encrypted first tokens, and using the set of encrypted first tokens in place of the set of first values in a predetermined computing environment.

3. The computer-implemented method of claim 1, wherein the format preserving encryption has inputs comprising a key and a tweak, wherein the use or purpose of the encrypted first token determines a value of the key, the tweak, or both.

4. The computer-implemented method of claim 3, further comprising providing at least an encrypted second token from the first value, wherein a plurality of encrypted tokens are provided from the first value for different uses or purposes.

5. The computer-implemented method of any preceding claim, comprising preserving a first set of places in the data field and encrypting a second set of places in the data field.

6. The computer-implemented method of any preceding claim, wherein the format preserving encryption method comprises digit-by-digit encryption.

7. The computer-implemented method of any of claims 1 to 5, wherein the format preserving encryption method comprises field preserving encryption for fields comprising multiple digits.

8. The computer-implemented method of any preceding claim, wherein the first value is or represents an account number for a payment device, and wherein the encrypted first token is used in place of the first value in one or more operations involved in performance or authorisation of a digital transaction.

9. The computer-implemented method of claim 7, wherein the first value is itself a token representing an account number for a payment device.

10. The computer-implemented method of claim 8 or claim 9 where dependent on claim 2, wherein the set of first values are stored in a secure database, and wherein the predetermined computing environment is a computing environment within a transaction processing system directly accessible to human operators.

11. The computer-implemented method of claim 8 or claim 9 where dependent on claim 4, wherein the encrypted first token and the encrypted second token are adapted for use in the processing of transactions for different transaction processing routes.

12. The computer-implemented method of claim 8 or claim 9 where dependent on claim 5, wherein the first set of places in the data field identify financial institutions and/or financial products, and where the second set of places in the data field represent user account information.

13. A computing device comprising a processor and memory and adapted to perform the method of one or more of claims 1 to 12.

14. A computing device as claimed in claim 13 and programmed to perform as a payment device, wherein the computing device is programmed to perform the method of one or more of claims 8, 9, 11 and 12.

15. A computing device as claimed in claim 13 being a server comprised within a transaction system and adapted for one or more of the provisioning of payment devices and the processing or authorization of transactions, wherein the server is programmed to perform the method of one or more of claims 8 to 12.

Figure 1

Figure 2

Figure 3

Figure 4

Figure 5

Figure 6

M

K → E

C

Figure 7A

M

K →
T → Ẽ

C

Figure 7B

M

T → Ẽ$_K$

C

Figure 7C

M

T = Tweak → H (SHA-1) → +

K = Key → E' (AES 128)

+

C

Figure 8

Information Specific to the
Digital Card Product (**IIN, BIN**),
as established by the TSP with
its customer Issuers.

Initialization

Information
Specific to
WSP/TR
(organization
identifier $O_q$)

## Figure 9A

Account Number
Field Preserving
Encryption
Initialization Table

Key Database
of TSP

Key of TSP

**Token Range Master Key**
TRMK

getIIN(PAN range)

**IIN**

AES128

$K_{IIN}$

getBIN(IIN)[Digital Products
Assignation Tables]

**BIN**

AES128

$K_{BIN}$

Digit j of D

$O_q$ identifier
of WSP/TR

Tweak (TI)

$A_{ij} = E_K(T_i, j) = E'[K](j \text{ xor } H(T_i)) \text{ xor } H(T_i)$

Bi

Ci

J

## Figure 9B

M

T = Tweak  H (SHA-1)  +

K = Key  E' (AES 128)

+

C

$C = E'\{H\}[K](T, M) = E'[K](M \text{ xor } H(T)) \text{ xor } H(T)$

**Figure 10A**

$d_j$

$T_i$ = Tweak  H (SHA-1)  H(T)  +

K = Key  E' (AES 128)

H(T)  +

$E_K$

$c_{ij}$

$c_{ij} = E_K[T](d_{ij}) = E_K(T_i, d_j)$

**Figure 10B**

indexOf{$m_n$}inD vector

Single digit "One" ("1") in the $r^{th}$ position of vector

$J$ = indexOf{$m_n$}inOrderedSetOf{D}.

All other elements of J are "zeroes" ("0")

$X$ $[0,... ,1, ...0]^T$

(n$^{th}$ line of I)

$e_n =$
$= P_n[K](m_n) =$
$= (n^{th}$ line of $I) \times J^T =$

| index$_{n0}$ | index$_{n1}$ | $\cdots$ | index$_{n8}$ | index$_{n9}$ |
| index$_{n0}$ | index$_{n1}$ | $\cdots$ | index$_{n8}$ | index$_{n9}$ |
| index$_{n0}$ | index$_{n1}$ | $\cdots$ | index$_{n8}$ | index$_{n9}$ |
| $\cdots$ | | $\cdots$ | $\cdots$ | $\cdots$ |
| index$_{n0}$ | index$_{n1}$ | $\cdots$ | index$_{n8}$ | index$_{n9}$ |
| $\cdots$ | | $\cdots$ | $\cdots$ | |
| index$_{n0}$ | index$_{n1}$ | $\cdots$ | index$_{n8}$ | index$_{n9}$ |
| index$_{n0}$ | index$_{n1}$ | $\cdots$ | index$_{n8}$ | index$_{n9}$ |

Figure 10C

Tweak data                  Useful data

| Wallet Provider/ Token Requestor (w) Data (not secret) | Issuer/Bank (b) Data (not secret) | Data = ANP |

M  [Variable block size with 31 to 41 bits corresponding to 9-12 digits ]

K

E (Block cipher)

C [Variable block size with 31 to 41 bits corresponding to 9-12 digits]

Encrypted: ANT

## Figure 11

M -- *i* integer in the set
I = {00...00, ..., 99...99}
of ANP

S(pice)

$HPC_K$

C -- *j* in the set:
O = {00...00, ..., 99...99} of ANT,
which is a pseudo-random permutation of:
I = {00...00, ..., 99...99}

## Figure 12

Current Integrity Key

Initial Vector (b, w)

**Additional Authenticated Data (AAD)**

IDD Authenticator Service

Authenticator Tag

## Figure 13

| Security Level | Central or Distributed Detokenisation | Payment Proof | Offline Data Authentication | Transaction Types |
|---|---|---|---|---|
| 3 | Decentralised (devices/servers) | OTT | Yes | Contactless |
| 2 | Decentralised (devices/servers) | OTT | No | Remote in-app Transactions (DSRP) |
| 1 | Decentralised (servers) | AC | No | Secure Card on File (SCOF) |
| Basic | Central | AC | No | Existing digital transactions |

Figure 14

Figure 15

Figure 16

Figure 17

Token Range Master Key
(TRMK)

Key Dispersion
(Token)

Token Master Key
(TMK)

Key Diversification
(ATC)

Session Key (SK)

## Figure 18

Transaction Data +
(randomly allotted ) Token +
1 Cryptogram (AC, EMVCo)

Payment proof verification
on Token (as today)

K(ATC, Token)

Transaction
Cryptogram

Verification of AC is OK
(Transaction Data is
valid and signed)

**Centralized** Token Vault

Detokenize
Token to
PAN

Token

PAN

Authorize
(Transaction Data on PAN)

## Figure 19A

Transaction Data +
(DyDE computed) Token +
2 Cryptograms

n

Payment proof verification
on Token (as today)

K(ATC, Token)

Transaction
Cryptogram

Verification of AC is OK
(Transaction Data is
valid and signed)

**De_ centralized** Token Vault as
Token -PAN mapping in each
device/server
I = Initialization Table for
WSP/TR

Token

PAN = Decryption
(DyDE) [Token]

NEW method
Replacing Detokenization Table

Authorize
(Transaction Data on PAN)

PAN

## Figure 19B

200

210

Information
Specific to Issuer

PAN

220

Information
Specific to
Consumer
with WSP

WSP

Valid electronic
payment instrument

Token =
EI_wsp(PAN)

240

Payment claim
(of the merchant)

Transaction
Data

Cryptographic
Transformation

230

One-Time Token
(OTT)

250

Production of
Digital Evidence
by consumer's device

Figure 20

TEE/SE (NOT REE)

Secert Key chosen
from a set of keys
kept in TEE/SE for
long duration

K0, K1, ..., K9

PAN (kept at the same level
as a secret key)

INPUT = PAN
presented directly in
secure memory

ATC
mod 10

Rotates with every
transaction

K

Tweaked FPE
Cryptographic
Transformation (HPC)

Payment claim
(of the merchant)

Transaction Data
(changes every
transaction)

TWEAK

240

230

Output = Direct One-
Time Token (OTT)

Production of Digital Evidence as a
Direct OTT by consumer's device

250

Figure 21

Figure 22

Figure 23

Figure 24

| Payment Scheme Number (1 Digit) | Switching Mean Ownership (Digits 2-6) | Account Number (Digits 7-18) | | Luhn Number (Digit 19) |
|---|---|---|---|---|
| 5 | Issuer Identification Number (IIN) | Account Number of PAN (ANP) | Secret/ confidential | On digits 1-18 |
| 2 | Bank Identification Number (BIN) | Account Number of (private) Token (ANT), where (private) Token = encrypted PAN | Secret/ confidential | On digits 1-18 |
| 2 | Bank Identification Number (BIN) | Account Number of One-Time-Token Payment (OTTP), where OTTP = TWE{Transaction Data}[ANT] | Switcheable/ NON- confidential | On digits 1-18 |

Figure 25

Figure 26

Figure 27

Figure 28

Figure 29

**WSP Initialization**

TSP's Digital Card Product
(IIN, BIN)

Initialization

WSP/TR
(organization
identifier O₁)

601

602

**Tokenization & Provision**

Kept by TSP

Account Number Field Preserving
Encryption Initialization Tables
(for each WSP/TR with identifier Oq)

tokenization
Request

ANP -- Account
Number of PAN
(consumer)

digitByDigitEncryption (ANP)

Validation

Channel Token

Derivation/Diversification/Dispersion

**D**

System key(s) sets
– SKS1, SKS2.

encryptedPAN
(ISO8583)(Mobile
App)

provisionRequest

ANT – Account Number Of
private Token – Valid
electronic payment
instrument –
encryptedToken

ATC

ARQC = FPE HPC Cryptographic
Transformation

Merchant's
Transaction Data
+ RANDOM

One-Time Token
Payment (OTTP)
(ISO8583)

**Production of
Digital Evidence
by consumer's device**

Digital Signature
Generation (CDA)

603

↓(First) Generate AC response

Figure 30

**EUROPEAN SEARCH REPORT**

Application Number

EP 25 15 1314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/358163 A1 (KUMAR SHARATH LAKSHMAN [IN] ET AL) 8 December 2016 (2016-12-08) | 1-4,6,8, 10,13,14 | INV. G06Q20/38 |
| Y | * paragraph [0018] - paragraph [0021] * <br> * paragraph [0039] - paragraph [0046] * <br> * paragraph [0057] - paragraph [0061] * <br> ----- | 5,7,9, 11,12,15 | G06Q20/02 |
| Y | US 2018/108014 A1 (WILLIAMS BRANDEN R [US]) 19 April 2018 (2018-04-19) <br> * paragraph [0021] * <br> ----- | 5,12,15 | |
| Y | US 2010/318468 A1 (CARR ROBERT O [US] ET AL) 16 December 2010 (2010-12-16) <br> * paragraph [0101] - paragraph [0106] * <br> * paragraph [0123] * <br> * paragraph [0142] - paragraph [0143] * <br> ----- | 7,11,12, 15 | |
| X | US 2023/231840 A1 (WU PAUL YING-FUNG [US] ET AL) 20 July 2023 (2023-07-20) | 1,2 | |
| Y | * paragraph [0030] * <br> * paragraph [0058] - paragraph [0065] * <br> ----- | 9,15 | |

TECHNICAL FIELDS SEARCHED (IPC)

G06Q
G07G

The present search report has been drawn up for all claims

| Place of search | Date of completion of the search | Examiner |
|---|---|---|
| The Hague | 12 May 2025 | Sigolo, Alessandro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1314

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2025

| Patent document cited in search report | Publication date | Patent family member(s) | Publication date |
|---|---|---|---|
| US 2016358163 A1 | 08-12-2016 | NONE | |
| US 2018108014 A1 | 19-04-2018 | NONE | |
| US 2010318468 A1 | 16-12-2010 | NONE | |
| US 2023231840 A1 | 20-07-2023 | US 9635011 B1 | 25-04-2017 |
| | | US 10021085 B1 | 10-07-2018 |
| | | US 2019007390 A1 | 03-01-2019 |
| | | US 2020153813 A1 | 14-05-2020 |
| | | US 2021320910 A1 | 14-10-2021 |
| | | US 2023231840 A1 | 20-07-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 24043321 W
- US 043321 W
- EP 3748525 A
- EP 24185536

**Non-patent literature cited in the description**

- Tweakable Block Ciphers. *Journal of Cryptology*, 2011, vol. 24, 588-613